(19) Europäisches Patentamt
European Patent Office
Office européen des brevets

(11) **EP 1 889 853 A1**

(12) **EUROPEAN PATENT APPLICATION**
published in accordance with Art. 153(4) EPC

(43) Date of publication:
**20.02.2008 Bulletin 2008/08**

(51) Int Cl.:
***C08B 37/06*** [(2006.01)]    ***A23L 1/05*** [(2006.01)]

(21) Application number: **06757147.1**

(22) Date of filing: **07.06.2006**

(86) International application number:
**PCT/JP2006/311453**

(87) International publication number:
**WO 2006/132288 (14.12.2006 Gazette 2006/50)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **07.06.2005 JP 2005010430**
**28.09.2005 JP 2005283058**
**13.03.2006 JP 2006067317**

(71) Applicants:
• **SAN-EI GEN F.F.I., INC.**
**Toyonaka-shi,**
**Osaka 561-8588 (JP)**
• **Phillips Hydrocolloids Research Limited**
**London W1S 4AQ (GB)**

(72) Inventors:
• **FUNAMI, Takahiro,**
**SAN-EI GEN F.F.I., INC.**
**Toyonaka-shi, Osaka 561-8588 (JP)**
• **KATAOKA, Yohei,**
**SAN-EI GEN F.F.I., INC.**
**Toyonaka-shi, Osaka 561-8588 (JP)**
• **HIROE, Mika,**
**SAN-EI GEN F.F.I., INC.**
**Toyonaka-shi, Osaka 561-8588 (JP)**

(74) Representative: **Müller-Boré & Partner**
**Patentanwälte**
**Grafinger Strasse 2**
**81671 München (DE)**

(54) **METHOD FOR MODIFICATION OF PECTIN AND APPLICATION THEREOF**

(57)    This invention modifies pectin, and improves, by the use of the modified pectin, physical properties of a subject composition, such as dispersion stability, emulsifying activity/emulsion stability, water holding property (syneresis inhibiting property), texture, viscosity development property, and gelling property. Pectin is modified by heating a raw material pectin in the form of a powder at 50 to 150°C for 1 minute to 48 hours. Preferably, as a raw material pectin to be heated, pectin whose loss upon drying is 20% (w/w) or lower is used. More preferably, the raw material pectin is heated at 50 to 150°C for 1 minute to 48 hours at a relative humidity of 20 to 90% (w/w) and/or under a reduced pressure.

EP 1 889 853 A1

**Description**

TECHNICAL FIELD

The present invention relates to a pectin modifying method, pectin modified by the method, and a composition containing the modified pectin. The present invention also relates to a method for modifying or improving (ameliorating) the physical properties, such as the dispersion stability, emulsifying activity/emulsion stability, water holding property (syneresis inhibiting property), texture, viscosity development property, and gelling property, of a subject composition using the pectin modified by the method.

BACKGROUND OF THE INVENTION

Conventionally, various food hydrocolloids have been used for the purpose of improving physical properties, such as dispersibility, emulsifying activity/emulsion stability, and foamability, and strengthening dietary fibers. Food hydrocolloids refer to proteins and polysaccharides with a particle diameter of about 1 $\mu$m or less which are present in foods that use water as a dispersion medium. Since hydrocolloids have viscosity, gelling property, dispersion stability, emulsifying activity/emulsion stability, foamability, water holding property, coating property, etc., the hydrocolloids themselves not only are useful as food materials but also have functions for improving the physical properties and functions of foods when the hydrocolloids are added to in a small amount. Texture, which is one of the factors that influences the palatability of foods, is closely related to the physical properties of foods. Food hydrocolloids that are capable of controlling the physical properties of foods are also referred to as texture modifiers. Recently, food hydrocolloids are being widely used to improve the hardness or stiffness and ease of swallowing of foods for persons who have difficulty in chewing and swallowing, and the applications are expanding.

Among food hydrocolloids, polysaccharides are derived from various botanical sources, and also have various functions. Examples of the origins of polysaccharides include seeds, rhizomes, sap (tree exudate), fruits, seaweeds, microorganisms, etc. The typical materials derived from each of the above mentioned origins are as follows: materials derived from seeds include guar gum, tara gum, locust-bean-gum, water-soluble soybean-polysaccharides, tamarind seed gum, and psyllium seed gum; materials derived from rhizome include konjac flour, glucomannan, and starch; materials derived from sap include gum arabic, tragacanth gum, karaya gum, and ghatti gum; materials derived from fruits include pectins; materials derived from seaweeds include agar, carrageenan, alginic acid, and alginate; materials derived from microorganisms include xanthan gum, gellant gum, pullulan, curdlan, etc.

In order to maximize the functions of polysaccharides , it is important to uniformly dissolve the polysaccharides in a dispersion medium (usually water). However, when a lot of polysaccharides are put in water, "lumps" (also called "unmixed lumps of flour") (non-swelled and non-hydrated grains) are formed. Once "lumps" are formed, it is extremely difficult to decompose the lumps, and manufacturing efficiency is sharply reduced. Thus, the formation of lumps poses a serious problem in the food industry. In order to avoid the formation of "lumps", methods involving the mixing, in advance, of polysaccharides with powdered ingredients, such as flour, sugar, skim milk powder, and the like; methods of dispersing polysaccharides in salad oil, liquid sugar and/or alcohol in advance, and then dissolving the same in water; etc., are employed. However, more convenient and effective methods are demanded.

In order to deal with diversified market needs and changes in consumer taste, as well as the need for cost reduction, more novel textures and advanced functions than ever before are demanded in the food industry. A method that can be mentioned for satisfying this demand is one in which several food hydrocolloids whose textures and functions are different from each other are used in combination for producing complementary/synergistic effects. Among polysaccharides, it is known that combinations of xanthan gum and guar gum, xanthan gum and locust bean gum, xanthan gum and glucomannan, carrageenan and locust bean gum, and carrageenan and glucomannan (konjac flour), etc., have the effects of improving gel strength, reducing syneresis property, etc. (Non-patent Document 1). However, the various market needs described above cannot be completely satisfied by only the above combinations.

Among food hydrocolloids, pectin is an acid polysaccharide comprising $\alpha$-D-galacturonic acid as a main chain component. Pectin is most widely used as a gelling agent for jellies and other confectioneries, and jams, or as a stabilizer for acidified milk beverages. However, pectin that can be applied to cosmetics and pharmaceuticals, is user-friendly, and has a novel texture and advanced functions is demanded.

With respect to pectin processing, a method of dissolving or dispersing pectin in water, adding an organic acid, and treating the result under heat or high pressure, thereby obtaining a novel pectin is known (Patent Document 1), and it is known that a pectin component obtained by treating pectin under acidic conditions with hot water at temperatures of 100°C (exclusive) to 150°C (inclusive) is useful as a dispersion stabilizer capable of stably dispersing solid matter in a dispersion (Patent Document 2). However, these methods involve heating pectin in the presence of water under acid conditions at a high pressure or high temperature, and therefore the methods require pH adjustment and pressurizing treatment, which disadvantageously complicates the production processes.

Patent Document 3 discloses, as a method of sterilizing water-soluble polysaccharide powders such as pectin, a method of dispersing water-soluble polysaccharide powders in a poor solvent into which the powders are not dissolved, bringing the result into contact with an oxidizing disinfectant, and heat-treating the result (50 to 95°C, for 30 minutes to 5 hours). Patent Document 3 discloses obtaining foods with favorable storage properties that are free from bacterial contamination by the use of water-soluble polysaccharide powders (pectin or the like) sterilized by the above-described method. However, Patent Document 3 does not refer to the influences exerted on the physical properties (e.g., water dispersibility, dispersion stability, emulsifying activity/emulsion stability, water holding property, texture, viscosity development property, and gelling property) of the water-soluble polysaccharide powders (pectin or the like) obtained by the above-described method.

[Patent-Document 1] Japanese Unexamined Patent Application Publication No. H10-155432
[Patent Document 2] Japanese Unexamined Patent Application Publication No. 2002-330710
[Patent Document 3] Japanese Unexamined Patent Application Publication No. H07-184565
[Non-patent Document 1] "Food polysaccharide: Knowledge of emulsification, thickening, and gelation", Naomichi Okazaki, Masao Sano, Saiwai Shobo (2001)

DISCLOSURE OF THE INVENTION

PROBLEM TO BE SOLVED BY THE INVENTION

The present invention aims to modify pectin, which is a typical food hydrocolloid, for producing or improving a desired function. More specifically, the present invention aims to provide a method for modifying pectin according to the above-mentioned objects. An object of the present invention is to provide pectin modified by the above-described method and a composition comprising the pectin. Furthermore, an object of the present invention is to provide applications of the pectin modified by the above-described method.

MEANS FOR SOLVING THE PROBLEM

The present inventors carried out extensive research in view of the above-mentioned problems of prior-art techniques, and found that, by heating pectin in the form of a powder whose loss upon drying is 20% by weight or less, the water dispersibility is improved as compared with pectin before heating (unmodified pectin), and also found that the physical properties (dispersion stability, emulsifying activity/emulsion stability, water holding property (syneresis inhibiting property), texture, viscosity development property, and gelling property) of a subject composition are ameliorated (improved) by incorporating the modified pectin into the subject composition. Furthermore, the present inventors found that it is preferable to modify pectin by heating it under specific conditions (50 to 150°C for 1 minute to 48 hours), and that it is preferable that the heat treatment at 50 to 150°C for 1 minute to 48 hours be performed under reduced pressure while adjusting the relative humidity to 20 to 90%. In addition, the present inventors found that high methoxyl pectin (HM pectin) whose esterification degree is 50% or higher or sugar beet pectin derived from sugar beets are preferable as modified pectin, and thus the present invention has been accomplished.

More specifically, the present invention has the following aspects.

Item 1. A method for modifying pectin comprising heat-treating pectin in a powder form at 50 to 150°C for 1 minute to 48 hours.

Item 2. A method for modifying pectin according to item 1, wherein the pectin has a loss upon drying of 20% by weight or less.
It should be noted that, according to the aspect of item 2, the loss upon the drying of pectin can also be adjusted to fall within the range of more than 10% by weight and 20% by weight or less.

Item 3. A method for modifying pectin according to item 1 or 2, wherein the heat treatment is performed at a relative humidity of 20 to 90%.
Preferably, the heat treatment is performed at a constant humidity where the relative humidity is 20 to 90%.

Item 4. A method for modifying pectin according to any one of items 1 to 3, wherein the heat treatment is performed under a reduced pressure condition.

Item 5. A method for modifying pectin according to any one of items 1 to 4, wherein the pectin is high methoxyl pectin whose esterification degree is not less than 50%.

Item 6. A method for modifying pectin according to any one of items 1 to 4, wherein the pectin is sugar beet pectin derived from sugar beets.

It should be noted that, the above-mentioned "method for modifying pectin" can be referred to as a "method for manufacturing modified pectin". Moreover, the water dispersibility of pectin itself can be mentioned as a physical property of pectin to be modified. More specifically, by modifying pectin, the pectin (modified pectin) whose water dispersibility is higher than that of pectin before being modified (unmodified pectin) can be obtained.

Physical properties of pectin to be modified include dispersion stability, emulsifying activity/emulsion stability, water holding property (syneresis inhibiting property), texture, viscosity development property, and gelling property that are given to a subject composition when pectin is applied to the subject composition.

Item 7. Pectin which has been modified by a method according to any one of items 1 to 6.

Item 8. A dispersant or a dispersion stabilizer consisting of pectin that has been modified by a method according to any one of items 1 to 6 or comprising said pectin.

Item 9. An emulsifier or an emulsion stabilizer consisting of pectin that has been modified by a method according to any one of items 1 to 6 or comprising said pectin.

Item 10. A syneresis inhibitor consisting of pectin that has been modified by a method according to any one of items 1 to 6 or comprising said pectin.

Item 11. A texture modifier consisting of pectin that has been modified by a method according to any one of items 1 to 6 or comprising said pectin.

Item 12. A viscosity adjuster consisting of pectin that has been modified by a method according to any one of items 1 to 6 or comprising said pectin.

It should be noted that the viscosity adjuster can also be used as a thickener or as a viscosity reducing agent according to the viscosity development property of the modified pectin.

Item 13. A gelling agent consisting of pectin that has been modified by a method according to any one of items 1 to 6 or comprising said pectin.

Item 14. A composition comprising pectin that has been modified by a method according to any one of items 1 to 6.

Item 15. A composition of item 14 comprising the modified pectin in a proportion of 0.01 to 10% by weight.

It should be noted that the proportion of the modified pectin can also be adjusted to fall within the range of not less than 0.01% by weight and less than 0.05% by weight and more than 5% by weight and not more than 10% by weight.

Item 16. A composition according to item 14 or 15 that is a food.

Item 17. A method for modifying or improving physical properties of a subject composition comprising incorporating, in the subject composition, pectin modified by a method according to any one of items 1 to 6. Here, as physical properties of the subject composition to be modified, dispersion stability, emulsifying activity and/or emulsion stability, water holding property (syneresis inhibiting property), texture, viscosity development property, and gelling property can be mentioned. Among the above properties, the dispersion stability, emulsifying activity and/or emulsion stability, and water holding property (syneresis inhibiting property) can be improved by using the modified pectin of the present invention.

Item 18. A method according to item 17, which improves dispersion stability of a subject composition, wherein a physical property of the subject composition is dispersion stability. The method can be referred to as a method for improving the dispersion stability of the subject composition, the method comprising incorporating pectin modified by a method according to any one of items 1 to 6 into the subject composition.

Item 19. A method according to item 17 that improves emulsifying activity and/or emulsion stability of a subject composition, wherein physical properties of the subject composition are emulsifying activity and/or emulsion stability. The method can be referred to as a method for improving the emulsifying activity and/or emulsion stability of the subject composition, the method comprising incorporating pectin modified by a method according to any one of items 1 to 6 into the subject composition.

Item 20. A method according to item 17 that improves water holding property or syneresis inhibiting property of a subject composition, wherein physical properties of the subject composition are water holding property or syneresis inhibiting property. The method can be referred to as a method for improving the water holding property (syneresis inhibiting property) of the subject composition, the method comprising incorporating pectin modified by a method according to any one of items 1 to 6 into the subject composition.

Item 21. A method according to item 17 that improves texture of a subject composition, wherein the subject composition is food and a physical property of the subject composition is texture. The method can be referred to as a method for improving the texture of the subject composition, the method comprising incorporating pectin modified by a method according to any one of items 1 to 6 into the subject composition.

Item 22. A method according to item 17 that adjusts the viscosity of a subject composition, wherein a physical property of the subject composition is viscosity. The method can be referred to as a method for adjusting the viscosity of the subject composition, the method comprising incorporating pectin modified by a method according to any one of items 1 to 6 into the subject composition.

Item 23. A method according to item 17 that increases viscosity of a subject composition, wherein a physical property of the subject composition is viscosity. The method can be referred to as a method for increasing the viscosity of the subject composition, the method comprising incorporating pectin modified by a method according to any one of items 1 to 6 into the subject composition.

Item 24. A method according to item 17 that reduces viscosity of a subject composition, wherein a physical property of the subject composition is viscosity. The method can be referred to as a method for reducing the viscosity of the subject composition, the method comprising incorporating pectin modified by a method according to any one of items 1 to 6 into the subject composition.

Item 25. A method according to item 17 that gives gelling property to a subject composition, wherein a physical property of the subject composition is gelling property. The method can be referred to as a method for giving gelling property to the subject composition, the method comprising incorporating pectin modified by a method according to any one of items 1 to 6 into the subject composition.

Item 26. A method according to item 17 that increases gel strength of a subject composition, wherein a physical property of the subject composition is gelling property. The method can be referred to as a method for increasing the gel strength of the subject composition, the method comprising incorporating pectin modified by a method according to any one of items 1 to 6 into the subject composition.

Item 27. A method according to item 17 that reduces gel strength of a subject composition, wherein a physical property of the subject composition is gelling property. The method can be referred to as a method for reducing the gel strength of the subject composition, the method comprising incorporating pectin modified by a method according to any one of items 1 to 6 into the subject composition.

EFFECT OF THE INVENTION

According to the present invention, pectin can be modified by a simple and safe method involving heat-treating pectin under specific conditions in such a manner that physical properties, such as dispersion stability, emulsifying activity/emulsion stability, water holding property (syneresis inhibiting property), texture, viscosity development property, and gelling property, have desired functions. The modified pectin obtained by the method has an advantage that the water dispersibility thereof is improved as compared with prior-art unmodified pectin, resulting in ease of use, and can also be effectively used as a dispersion stabilizer, emulsion stabilizer, syneresis inhibitor, texture modifier, viscosity adjuster, or gelling agent.

BEST MODE FOR CARRYING OUT THE INVENTION

(1) A Method for Modifying Pectin, and Pectin Obtained by the Method

The modifying method for pectin of the present invention can be carried out by heating a raw material pectin in a powder form whose loss upon drying is 20% or less by weight (hereinafter, referred to as "% (w/w)").
When heat treatment is performed under such conditions, it is preferable to adjust and control the relative humidity in a treatment tank or an incubator to fall within a range of predetermined humidity. As such a relative humidity range, a range of 20 to 90% can be mentioned, and the relative humidity can be suitably adjusted within this range. The relative humidity is preferably within the range of 45 to 85%.

The raw material pectin to be heated is not limited insofar as it is in a dry state where the loss upon drying is 20% (w/w) or less. The loss upon drying is preferably 10% (w/w) or less, more preferably 5% (w/w) or less, and still more preferably 3% (w/w) or less. When heat-treatment is performed at a relative humidity of 50% or less, it is preferable to use a raw material pectin whose loss upon drying is as low as possible.

It should be noted that the "loss upon drying" in the present invention is used for indicating the degree of dryness of the pectin. The loss upon drying refers to a proportion of reduced weight when heat treatment is performed at 105°C for 3 hours under normal pressure, and can be calculated by the following equation.

[Equation 1]

Loss upon drying (%) =

(weight before heating - weight after heating)/weight before

heating × 100(%)

Specifically, the "pectin whose loss upon drying is 20% (w/w)" refers to pectin whose weight is reduced by 20% (w/w) after heat treatment at 105°C under normal pressure for 3 hours relative to the weight (which is 100% (w/w)) before heat treatment.

In the case where heat treatment is performed at a relative humidity of less than 50%, when the loss upon drying of a raw material pectin is higher than 20% (w/w), discoloration (browning) and agglomeration (caking) are likely to occur due to prolonged heat treatment. Therefore, when the raw material pectin has a loss upon drying of higher than 20% (w/w), it is preferable to reduce the loss upon drying to 20% (w/w) or lower in advance by vacuum drying, lyophilization, etc.

In contrast, in the case where the heat treatment is performed at a relative humidity of 50% or higher, the raw material pectin is not adversely affected by the loss upon drying. Any pectin can be used irrespective of the loss upon drying insofar as the pectin is in the form of a powder.

The particle diameter of a powdered pectin used for modifying is not limited and, for example, a particle diameter of about a 10-mesh screen or smaller can be mentioned. In addition, the powdered pectin can be prepared by a method involving drying and pulverizing fibrous pectin collected by adding alcohol to pectin extract; a method involving spray-drying pectin extract; a method involving crushing solid pectin into a powder form; a method involving prior-freezing powdered pectin, followed by freeze drying; etc.

The lower limit of the heating temperature of the raw material pectin is 50°C or higher, preferably 60°C or higher, and more preferably 70°C or higher, and the upper limit thereof is 150°C or lower, preferably 140°C or lower, or lower than 140°C, and more preferably 120°C or lower. When the heating temperature is much lower than 50°C, the modification effect is insufficient, and when the heating temperature far exceeds 150°C, deterioration (browning) in appearance is remarkable, and a large amount of water-insoluble components may be formed, depending on the heating time described below. The heating time is 1 minute to 48 hours, preferably 5 minutes to 36 hours, and still more preferably 10 minutes to 24 hours. When the heating time is much shorter than 1 minute, the modification effect is insufficient, and when the heating time far exceeds 48 hours, further modification effect cannot be expected, deterioration (browning) in appearance is remarkable, and a large amount of water-insoluble components may be formed, depending on the heating temperature.

In many cases, when the heating temperature is relatively low (e.g., 80°C or lower, specifically 50 to 80°C), treatment at a relatively high humidity (e.g., not less than 50%, specifically 50 to 90%) can achieve a desired modification effect in a shorter time (effect of improving dispersibility, dispersion stability, emulsifying activity/emulsion stability, water holding property (syneresis inhibiting property), texture, viscosity development property, gelling property, etc.) or higher modification effects can be expected in the same treatment time.

It should be noted that when heat treatment is performed under normal atmospheric pressure, a deterioration in appearance, such as browning or the like, is likely to occur. Thus, it is preferable to perform the heat treatment under a reduced pressure. The reduced pressure condition includes, but is not limited to, 0.01 to 500 mmHg, preferably 0.01 to 300 mmHg, and more preferably about 0.01 to 200 mmHg, for example.

When an object of modifying pectin is to improve water dispersibility (inhibition of the formation of lumps at the time of dissolving pectin in water) of the pectin itself, a method of heating at about 120 to 150°C for about 10 to 60 minutes, and preferably at about 120 to 140°C for about 20 to 40 minutes can be mentioned. Mentionable as humidity

**EP 1 889 853 A1**

conditions during heat treatment are constant humidity conditions wherein the relative humidity is 20 to 90%, and preferably 45 to 85%. By adjusting the relative humidity to be relatively high (e.g., 80%),the water dispersibility of pectin can also be improved by heating at a relatively low temperature. In a constant humidity where the relative humidity is 80%, a method involving heating at about 50 to 80°C for 10 to 150 minutes can be mentioned. As a raw material pectin to be used in this case, HM pectin whose esterification degree is not less than 50% can be mentioned.

When an object of modifying pectin is to improve dispersion stability (coagulation inhibiting and precipitation inhibiting effects against milk protein) in acidified milk beverages (subject composition) whose pH is 5 or less and which have protein in a proportion of 0.1% by weight or more, a method involving heating at about 50 to 110°C for about 10 to 60 minutes, and preferably at about 100 to 110°C for about 20 to 40 minutes can be used. As humidity conditions during the heat treatment, constant humidity conditions where the relative humidity is 20 to 90%, and preferably 45 to 85% can be mentioned, for example. As a raw material pectin to be used in this case, HM pectin whose esterification degree is not less than 50% can be mentioned, for example.

When an object of modifying pectin to improve the emulsifying activity and/or emulsification stability of a subject composition, a method involving heating at about 50 to 150°C for about 10 minutes to 48 hours, and preferably at about 60 to 100°C for about 1 to 24 hours can be mentioned. As humidity conditions during the heat treatment, constant humidity conditions where the relative humidity is 20 to 90%, and preferably 45 to 85% can be mentioned, for example. As a raw material pectin to be used in this case, sugar beet pectin derived from sugar beets can be mentioned.

When an object of modifying pectin to improve the water holding property (syneresis inhibiting property) of a subject composition, a method of heating at about 50 to 80°C for about 10 to 360 minutes, a method of heating at about 80 to 110°C for about 5 to 60 minutes, and a method of heating at about 110 to 120°C for 1 to 20 minutes can be mentioned. Preferably, a method of heating at about 70 to 90°C for about 10 to 60 minutes can be used, and more preferably a method of heating at about 70 to 90°C for about 20 to 40 minutes can be used. As humidity conditions during the heat treatment, constant humidity conditions where the relative humidity is 20 to 90%, and preferably 45 to 85% can be mentioned, for example. As a raw material pectin to be used in this case, HM pectin whose esterification degree is not less than 50% can be mentioned, for example. In contrast, when using sugar beet pectin derived from sugar beet as a raw material pectin, a method of heating at about 50 to 150°C for about 10 minutes to 16 hours can be mentioned. As humidity conditions during the heat treatment, constant humidity conditions where the relative humidity is 20 to 90%, and preferably 45 to 85% can be mentioned, for example.

When an object of modifying pectin is to modify the texture of a subject composition, a method of heating at about 50 to 120°C for about 10 to 60 minutes, and preferably at about 70 to 110°C for about 20 to 40 minutes can be mentioned. As humidity conditions during the heat treatment, constant humidity conditions where the relative humidity is 20 to 90%, and preferably 45 to 85% can be mentioned, for example. As a raw material pectin to be used in this case, HM pectin whose esterification degree is not less than 50% can be mentioned, for example.

In the present invention, the viscosity development property refers to property by which viscosity is developed when pectin is completely dissolved in water. The modified pectin of the present invention exhibits, depending on heat conditions, low viscosity development property (viscosity being lower than that when unmodified pectin is dissolved in water) or high viscosity development property (viscosity being higher than that when unmodified pectin is dissolved in water), and the degree (lower or higher) of the viscosity development can be adjusted according to the object.

When an object of modifying pectin is to increase the viscosity (high viscosity development property) of a subject composition, a method of heating at about 50 to 80°C for about 10 to 360 minutes, a method of heating at about 80 to 110°C for about 5 to 60 minutes, or a method of heating at about 110 to 120°C for about 1 to 20 minutes can be mentioned. Preferably, a method of heating at about 70 to 90°C for about 10 to 60 minutes can be used, and more preferably a method of heating at about 70 to 90°C for about 20 to 40 minutes can be used. As humidity conditions during the heat treatment, constant humidity conditions where the relative humidity is 20 to 90%, and preferably 45 to 85% can be mentioned, for example. As a raw material pectin to be used in this case, HM pectin whose esterification degree is not less than 50% can be used, for example. In contrast, when using sugar beet pectin derived from sugar beets as a raw material pectin, a method of heating at about 50 to 150°C for about 10 minutes to 16 hours can be mentioned. As humidity conditions during the heat treatment, constant humidity conditions where the relative humidity is 20 to 90%, and preferably 45 to 85% can be mentioned, for example.

When an object of modifying pectin is to reduce the viscosity (low viscosity development property) of a subject composition, a method of heating at about 100 to 120°C for at least 150 minutes, a method of heating at about 120 to 140°C for at least 30 minutes, and a method of heating at about 140°C for at least 10 minutes can be mentioned. As humidity conditions during the heat treatment, constant humidity conditions where the relative humidity is 20 to 90%, and preferably 45 to 85% can be mentioned, for example.

As a raw material pectin to be used in this case, HM pectin whose esterification degree is not less than 50% can be used, for example. In contrast, when using sugar beet pectin derived from sugar beets as a raw material pectin, a method of heating at 80°C or higher at a relatively high humidity (e.g., 70% or higher) for a long period of time (e.g., about 24 to 48 hours) can be mentioned.

7

The gelling property generally refers to property exhibiting an intermediate state of solid and liquid where a substance cannot flow due to self-weight (formation of a gel) when retaining moisture. In the case of pectin, gel formation conditions differ between HM pectin or LM pectin. In the case of HM pectin, a gel is formed when about 50% or more of the solids, such as sugar or the like, are present and the pH is 3.5 or less. In the case of LM pectin, a gel with relatively high thermal stability is formed without being influenced by the solid amount and the pH under conditions where multicharged ions, such as calcium and magnesium, are present.

The modified pectin of the present invention may, depending on heating conditions, form a hard gel (a gel whose fracture strength value is higher than that of a gel formed from unmodified pectin), or form a soft gel (a gel whose fracture strength value is lower than that of a gel formed from unmodified pectin). Thus, the hardness of the formed gel can be adjusted according to the object. It should be noted that in the present invention, the property for forming a hard gel is referred to as "hard gel formation property" and the property for forming a soft gel is referred to as "soft gel formation property".

When an object of modifying pectin is to give hard gel formation property to a subject composition, a method of heating at about 50 to 120°C for about 10 to 60 minutes can be used, and preferably a method of heating at about 100 to 110°C for about 20 to 40 minutes can be used. As humidity conditions during the heat treatment, constant humidity conditions where the relative humidity is 20 to 90%, and preferably 45 to 85% can be mentioned, for example. As a raw material pectin to be used in this case, HM pectin whose esterification degree is not less than 50% can be mentioned, for example.

In contrast, when the object of modifying pectin is to give soft gel formation property to a subject composition, a method of heating the subject composition at about 140°C or higher for 30 minutes or more can be used. As a raw material pectin to be used in this case, HM pectin whose esterification degree is not less than 50% can be mentioned, for example.

There are no limitations to the raw material pectin used in the present invention insofar as it has a loss upon drying within the above-mentioned range. However, when the physical properties to be modified are dispersion stability and gelling property, it is preferable to use a high methoxyl pectin (HM pectin) whose esterification degree is not less than 50% as mentioned above. Such HM pectin is commercially available, and, for example, SM-762 (San-Ei Gen F.F.I., Inc.) and the like can be mentioned. In contrast, in the case of a low methoxyl pectin (LM pectin) whose esterification degree is less than 50%, decomposition of the main chain of pectin by heat treatment is more remarkable compared with the HM pectin, sometimes resulting in lower dispersion stability and gelling property.

It should be noted that when the relative humidity during heat treatment is 50% or higher, the loss upon drying is not limited to the above examples. Thus, a powdered pectin can be used irrespective of its loss upon drying.

When the physical properties to be modified are emulsifying activity and emulsion stability, it is preferable to use sugar beet pectin derived from sugar beets (Beta vulgaris LINNE var.rapa DUMORTIER) as a raw material pectin. Sugar beet pectin is one of the structural polysaccharides of sugar beet pulp, and comprises a backbone of D-galacturonan through $\alpha$-1,4 glucosidic linkages, a side chain mainly comprising neutral sugars, such as arabinose, galactose, etc., and protein bonded to the side chain. The average molecular weight is 400,000 to 500,000. In some cases, the backbone is interrupted by the insertion of L-rhamnose, giving kinks and chain flexibility. The backbone of sugar beet pectin occupies about 40% of the whole molecular weight, and D-galacturonic acid within the backbone is partially acetylated and methyl-esterified. When using sugar beet pectin derived from sugar beets as a raw material pectin, the effect of the present invention can be achieved irrespective of the content of the methyl ester group. Such sugar beet pectin is commercially available, and, for example, VISTOP D-2250(tradename, San-Ei Gen F.F.I., Inc.) and the like can be mentioned.

When the physical properties to be modified are the water dispersibility, water holding properties (syneresis inhibiting properties), and viscosity development property of pectin, any HM pectin whose esterification degree is not less than 50% and sugar beet pectin derived from sugar beets can be used.

The surface structure of pectin changes due to the above-mentioned heat treatment, whereby water dispersibility is improved. When HM pectin is used as a raw material pectin, modified pectin obtained by heat treatment particularly at about 120 to 150°C for about 10 to 60 minutes; modified pectin obtained by heat treatment preferably at about 120 to 140°C for about 20 to 40 minutes; or modified pectin obtained by heat treatment at a relatively high relative humidity (e.g., 80%) at a relatively low temperature (e.g., about 50 to 80°C for 10 to 360 minutes) is excellent in water dispersibility and is less likely to form lumps compared with non-heat-treated pectin (unmodified), and therefore, processability and the like are remarkably improved (i.e., production ease) when dissolving pectin in water. In this action mechanism, when pectin is added to water and is gently stirred for dissolving, a partial gel structure formed due to heat treatment inhibits rapid water absorption on the powder surface, whereby water dispersibility is presumably improved.

As described above, the modified pectin prepared by heating HM pectin whose esterification degree is preferably 50% or higher at a relative humidity adjusted to 20 to 90%, preferably 45 to 85% at about 50 to 110°C for about 10 to 60 minutes, and preferably at about 100 to 110°C for about 20 to 40 minutes have a high dispersion stabilizing effect (inhibitory effect against the formation of precipitate with time) of milk protein under acidic conditions, compared with non-heat-treated pectin (unmodified). In addition, the dispersion stabilizing effect of pulp in fruit juice is also high. Therefore, the modified pectin prepared by the method can be effectively used as a dispersion stabilizer. In this action mechanism, the electric interactions between pectin and milk protein are presumably stabilized due to the heat treatment. However, the mechanism has not been sufficiently solved.

Moreover, in the modified pectin prepared by heating sugar beet pectin derived from sugar beets at a relative humidity adjusted to 20 to 90%, and preferably to 45 to 85%, at about 50 to 150°C for about 10 minutes to 48 hours, and preferably at a relatively high relative humidity (e.g., 70% or higher) at about 60 to 100°C for about 1 to 48 hours, the average particle diameter of oil droplets is smaller when preparing an oil-in-water (O/W) emulsion and the change with time is smaller, compared with non-heat-treated pectin (unmodified). Therefore, the modified pectin prepared by the method can be effectively used as an emulsifier or an emulsion stabilizer. In this action mechanism, it is presumed that, due to intramolecular or innermolecular interactions upon heating, the hydrophobicity of pectin increases, presumably leading to increased surface activity. The modified pectin obtained by the present invention can maintain high emulsifying performance even if emulsions are prepared under various homogenizing conditions. More specifically, although there are various homogenization conditions when actually manufacturing foods, modified pectin suitable for various homogenization conditions can be selected from the modified pectins obtained by the present invention.

The modified pectin prepared by heating an HM pectin whose esterification degree is 50% or higher at a relative humidity adjusted to 20 to 90%, and preferably to 45 to 85%, at about 50 to 80°C for about 10 to 360 minutes; at about 80 to 110°C for about 5 to 60 minutes; at about 110 to 120°C for about 1 to 20 minutes; or at about 70 to 90°C for about 10 to 60 minutes, and preferably at 70 to 90°C for about 20 to 40 minutes; as well as the modified pectin prepared by heating sugar beet pectin derived from sugar beets at 50 to 150°C for about 10 minutes to 16 hours have high syneresis inhibitory effect (water holding effect) and, in many cases, high viscosity (high viscosity development property), compared with non-heat-treated pectin (unmodified) at the same concentration. Thus, the modified pectin can be effectively used as a syneresis inhibitor (water holding agent) or a viscosity modifier (thickener). In this action mechanism, since the partial gel structure formed as a result of the intermolecular interaction captures a larger amount of moisture and entraps moisture more strongly, water holding property and high viscosity development property are presumably improved.

The modified pectin prepared by heating an HM pectin whose esterification degree is 50% or higher at a relative humidity adjusted to 20 to 90%, and preferably to 45 to 85%, at about 50 to 120°C for about 10 to 60 minutes, and preferably at about 70 to 110°C for about 20 to 40 minutes can be effectively used as a texture modifier.

The modified pectin prepared by heating an HM pectin whose esterification degree is 50% or higher at a relative humidity adjusted to 20 to 90%, and preferably to 45 to 85%, at about 50 to 80°C for about 10 to 360 minutes; at about 80 to 110°C for about 5 to 60 minutes; at about 110 to 120°C for about 1 to 20 minutes; or at about 70 to 90°C for about 10 to 60 minutes, and preferably at about 70 to 90°C for about 20 to 40 minutes can be used for the purpose of increasing the viscosity of a subject composition (producing high viscosity development property).

The modified pectin prepared by heating sugar beet pectin derived from sugar beets at a relative humidity adjusted to 20 to 90%, and preferably to 45 to 85%, at about 50 to 150°C for about 10 minutes to 16 hours can also be used for the purpose of increasing the viscosity (producing high viscosity development property) of a subject composition.

In contrast, the modified pectin prepared by heating an HM pectin whose esterification degree is 50% or higher at about 100 to 120°C for 150 minutes or more, at about 120 to 140°C for 30 minutes or more, or at about 140°C for 10 minutes or more, and the modified pectin prepared by heating sugar beet pectin derived from sugar beet at a relatively high relative humidity (e.g., 70% or more) over a long period of time (e.g., about 24 to 48 hours) can be used as, for example, a viscosity reducing agent for the purpose of reducing the viscosity (giving low viscosity development property) of a subject composition.

The modified pectin prepared by heating HM pectin whose esterification degree is 50% or higher at a relative humidity adjusted to 20 to 90%, and preferably to 45 to 85%, at about 50 to 120°C for about 10 to 60 minutes; and preferably at about 100 to 110°C for about 20 to 40 minutes has a property of forming a gel (hard gel) with a high gel strength (rupture stress), compared with a gel formed from non-heat-treated pectin (unmodified) at the same concentration. In this action mechanism, pectin molecules polymerize due to the intermolecular interactions by heat treatment, and therefore the network structure of gels becomes dense and firm, presumably resulting in increased gel strength. In contrast, the modified pectin prepared by heating HM pectin whose esterification degree is 50% or higher at about 140°C or higher for 30 minutes or more has a property of forming a gel (soft gel) with a low gel strength (rupture stress), compared with a gel formed from non-heat-treated pectin (unmodified) at the same concentration. Considering the above, the modified pectin prepared by the above-described methods can be effectively used as a gelling agent.

(2) The Modified-Pectin-Containing Composition, and Applications Thereof

The present invention also relates to a composition comprising the modified pectin prepared by the above-described heat treatment. As described above, each modified pectin can be effectively used as a dispersion stabilizer, an emulsifier/emulsion stabilizer, a water holding property giving agent (syneresis inhibitor), a viscosity modifier, and a gel formation agent based on their dispersion stability action, emulsifying activity/emulsion stabilizing action, water holding action (syneresis inhibiting action), viscosity development action, and gel formation action. Therefore, when the modified pectin is added to various kinds of compositions (subject compositions), such as food compositions, cosmetic compositions, or pharmaceutical compositions, desired physical properties (dispersion stability, emulsifying activity/ emulsion stability, water holding property (syneresis inhibiting property), texture, viscosity development property, and gelling property) are imparted to the subject composition according to the type of subject composition, or the physical properties inherently imparted to the subject composition (dispersion stability, emulsifying activity/emulsion stability, water holding property (syneresis inhibiting property), texture, viscosity development property, and gelling property) can be modified or improved (ameliorated).

Since, in particular, the physical properties (mechanical characteristics) of orally consumed compositions, such as foods, pharmaceuticals, etc., are closely related to texture, the texture can also be modified by incorporating the modified pectin.

The amount of modified pectin added to the subject composition depends on the type and application of the subject composition; the physical properties inherently imparted to the subject composition to be modified (dispersion stability, emulsifying activity/emulsion stability, water holding property (syneresis inhibiting property), texture, viscosity development property, and gelling property); and the treatment conditions of the modified pectin to be used. For example, when the subject composition is a food, the proportion of the modified pectin mixed in 100% by weight of foods is generally about 0.01 to 10% by weight, and preferably about 0.05 to 5% by weight. The modified pectin may be added to a subject composition by a routine method, and there are no limitations to the adding methods.

As an effect obtained when adding the modified pectin to foods, the inhibitory effect against the formation of lumps at the time of dissolving a powder in water, i.e., improvement in the water-dispersion of the pectin itself, can be specifically mentioned. Also mentionable are an improvement in the dispersion stability of foods, such as an inhibition of creaming, emulsion separation, and milk protein aggregation under acidic conditions; an improvement in emulsifying activity and/or emulsion stability; an improvement in water holding property, such as an increase in the inhibition of syneresis with time, an increase in cooking yields, etc.; and sensory modification, such as softness, moistness, juiciness; etc. Furthermore, viscosity and gel strength can be increased in the same concentration, compared with the case where a non-treated pectin is used. Therefore, in the case of, for example, jam or the like, the addition amount can be reduced, i.e., costs can be reduced. Furthermore, a polymezired modified pectin is likely to have a gel structure in terms of physical properties, and have short mouthfeel, reduced stickiness, and meltdown in the mouth, and thus can be usable as a fat replacer.

As compositions containing the modified pectin of the present invention, the following foods can be mentioned: ice cream, ice milk, *lact ice* (an ice cream-like dessert having a low milk solids content), sherbet, ice desserts containing no milk, and like frozen desserts; milk, milk beverages, lactic acid bacteria beverages, soft drinks with fruit juices, carbonated beverages, fruit juice beverages, vegetable beverages, tea beverages, ion drinks, sports drinks, functional drinks, vitamin supplement drinks, nutritional supplement balance drinks, jelly drinks, powdered beverages, and like beverages; custard puddings, milk puddings, fruit juice-containing puddings, and like puddings; jellies, Bavarian creams, yogurts, and like desserts; chewing gums, bubble gums, and like gums (stick gums, sugar-coated tablet gums); coated chocolates, such as colored sugar-coated chocolate candies and the like; flavored chocolates, such as strawberry chocolates, blueberry chocolates, melon chocolates, and the like; soft candies (including caramels, nougats, gummy candies, marshmallows, etc.), taffies and like caramels; soft biscuits, soft cookies, and like confections; emulsion dressings, two-layered dressings, oil-free dressings, and like dressings; ketchups, basting , sauces, and like seasoning liquids; strawberry jam, blueberry jam, marmalade, apple jam, apricot jam, preserves, and like jams; red wines and like fruit wines; cherries, apricots, applies, strawberries or peaches preserved in syrup, and like processed fruits; ham, sausage, roast pork, and like processed meats; fish ham, fish sausage, fish fillets, *kamaboko* (steamed fish paste), *chikuwa* (baked fish paste), *hanppen* (fish minced and steamed), *satsumaage* (fried fish ball), *datemaki* (omelet wrappers), whale bacon, and like processed marine products; udon (wheat noodles), *hiyamugi, somen* (fine noodles), *soba* (buckwheat noodles), Chinese noodle, spaghetti, macaroni, *bifun* (rice noodles), *harusame* (bean-jelly stick), wontons, and like noodles; sandwich breads, pastries, specialty or filled breads, and like breads; coffee cream, fresh cream, custard cream, whipped cream, fermented cream, sour cream, and like creams; consomme soup, potage soup, cream soup, Chinese soup, and like soups; miso soup, clear soup, stew, curry, gratin and like soups; various prepared foods and processed foods, etc. In addition to the above-mentioned common foods, protein/phosphorus/potassium-controlled foods, salt-controlled foods, fat-and-oil-controlled foods, foods for regulating the functions of the intestines, calcium/iron/vitamin-enriched foods, low-allergy foods, concentrated liquid foods, mixer foods, sliced foods, and like special foods and therapeutic diets; digestion/swallowing assisting foods, which are so-called thickening agents, etc., can be mentioned. Moreover, the modified pectin of the present invention can be applied to various fields other than foods, i.e., the cosmetic and pharmaceutical fields.

EXAMPLES

The following Preparation Examples, Examples, Comparative Examples, etc., are given to describe the present invention in detail, and are not intended to limit the scope of the invention. In these examples, products marked with an asterisk (*) are products of San-Ei Gen F.F.I., and names marked with a double asterisk (**) are registered trademarks of San-Ei Gen F.F.I.

Preparation Examples 1 to 4: Preparation of modified HM pectins

The pectin used was "SM-762"* (degree of esterification: 70 to 72%), corresponding to HM pectin. This HM pectin in powder form, which has a loss upon drying of 5 to 10%, was washed three times with a 17-fold volume of 70 vol.% aqueous ethanol solution, pre-frozen at -40°C, and freeze-dried. The resulting HM pectin was powdery and had a loss upon drying of less than 3%.

The pectin was enclosed in aluminum pouches with a thickness of about 5 mm (10 g per pouch). After reducing the pressure in the pouches to 60 mmHg, the pouches were heat-sealed. The pectin in the pouches was heat-treated in an incubator (relative humidity: less than 50%) at 80°C, 105°C, 120°C, and 140°C, for 15 minutes, 30 minutes, 60 minutes, 150 minutes, and 300 minutes at each temperature, to obtain the modified pectins shown in Table 1 (Preparation Examples 1-1 to 1-5, Preparation Examples 2-1 to 2-5, Preparation Examples 3-1 to 3-5, and Preparation Examples 4-1 to 4-5).

[Table 1]

| Heating time / Heating temperature | 15 min | 30 min | 60 min | 150 min | 300 min |
|---|---|---|---|---|---|
| 80°C | Prep.Ex. 1-1 | Prep.Ex. 1-2 | Prep.Ex. 1-3 | Prep.Ex. 1-4 | Prep.Ex. 1-5 |
| 105°C | Prep.Ex. 2-1 | Prep.Ex. 2-2 | Prep.Ex. 2-3 | Prep.Ex. 2-4 | Prep.Ex. 2-5 |
| 120°C | Prep.Ex. 3-1 | Prep.Ex. 3-2 | Prep.Ex. 3-3 | Prep.Ex. 3-4 | Prep.Ex. 3-5 |
| 140°C | Prep.Ex. 4-1 | Prep.Ex. 4-2 | Prep.Ex. 4-3 | Prep.Ex. 4-4 | Prep.Ex. 4-5 |

Relative humidity: not adjusted (<50%).

Preparation Examples 5 to 7: Preparation of modified HM pectins

A powdery HM pectin having a loss upon drying of less than 3% was prepared in the same manner as in Preparation Examples 1 to 4. The pectin was weighed out into ceramic containers (about 20 g per container), leveled to a uniform thickness (about 5 mm), and heat-treated in an incubator at a constant temperature of 60°C, and at a constant relative humidity of 50%, 70%, or 80%, for 15 minutes, 30 minutes, 60 minutes, 150 minutes, and 300 minutes at each relative humidity, to obtain the modified pectins shown in Table 2 (Preparation Examples 5-1 to 5-5, Preparation Examples 6-1 to 6-5, and Preparation Examples 7-1 to 7-5).

[Table 2]

| Relative humidity ╲ Heating time | 15 min | 30 min | 60 min | 150 min | 300 min |
|---|---|---|---|---|---|
| 50% | Prep.Ex. 5-1 | Prep.Ex. 5-2 | Prep.Ex. 5-3 | Prep.Ex. 5-4 | Prep.Ex. 5-5 |
| 70% | Prep.Ex. 6-1 | Prep.Ex. 6-2 | Prep.Ex. 6-3 | Prep.Ex. 6-4 | Prep.Ex. 6-5 |
| 80% | Prep.Ex. 7-1 | Prep.Ex. 7-2 | Prep.Ex. 7-3 | Prep.Ex. 7-4 | Prep.Ex. 7-5 |

Heating temperature: fixed at 60°C

Preparation Examples 8 to 9: Preparation of modified sugar beet pectins

The pectin used was "VISTOP™ D-2250"* (degree of esterification: about 55%, degree of acetylation: about 20%), corresponding to sugar beet pectin derived from sugar beet. This sugar beet pectin in powder form, which has a loss upon drying of 5 to 10%, was washed three times with a 17-fold volume of 70 vol.% aqueous ethanol solution, pre-frozen at -40°C, and freeze-dried. The resulting sugar beet pectin was powdery and had a loss upon drying of less than 3%. The pectin was enclosed in aluminum pouches (10 g per pouch). After reducing the pressure in the pouches to 60 mmHg, the pouches were heat-sealed. The pectin in some of the pouches was heat-treated in an incubator (relative humidity: less than 50%), at 60°C, 80°C, 105°C, 120°C, and 140°C for 30 minutes, to obtain the modified pectins shown in Table 3 (Preparation Examples 8-1 to 8-5).

The pectin in the other pouches was heat-treated in an incubator (relative humidity: less than 50%) at 105°C for 15 minutes, 30 minutes, 60 minutes, 150 minutes, and 300 minutes, to obtain the modified pectins shown in Table 4 (Preparation Examples 9-1 to 9-5).

[Table 3]

| Heating Temperature ╲ Heating time | 30 min |
|---|---|
| 60°C | Prep.Ex. 8-1 |
| 80°C | Prep.Ex. 8-2 |
| 105°C | Prep.Ex. 8-3 |
| 120°C | Prep.Ex. 8-4 |
| 140°C | Prep.Ex. 8-5 |

Relative humidity: not adjusted (<50%)

[Table 4]

| Heating Time \ Heating temperature | 105°C |
|---|---|
| 15 min | Prep.Ex. 9-1 |
| 30 min | Prep.Ex. 9-2 |
| 60 min | Prep.Ex. 9-3 |
| 150 min | Prep.Ex. 9-4 |
| 300 min | Prep.Ex. 9-5 |

Relative humidity: not adjusted (<50%)

Preparation Example 10: Preparation of modified sugar beet pectins

In a manner similar to Preparation Examples 8 and 9, a powdery sugar beet pectin (loss upon drying: 8 to 12%) was weighed out into ceramic containers (about 20 g per container), leveled to a uniform thickness (about 5 mm), and heat-treated in an incubator at a constant temperature of 80°C and at a constant relative humidity of 80% for 15 minutes, 30 minutes, 60 minutes, 150 minutes, or 300 minutes, to obtain the modified pectins shown in Table 5 (Preparation Examples 10-1 to 10-5).

[Table 5]

| Heating Time \ Heating temperature | 80°C |
|---|---|
| 15 min | Prep.Ex. 10-1 |
| 30 min | Prep.Ex. 10-2 |
| 60 min | Prep.Ex. 10-3 |
| 150 min | Prep.Ex. 10-4 |
| 300 min | Prep.Ex. 10-5 |

Relative humidity: fixed at 80%

Preparation Examples 11 to 16: Preparation of modified sugar beet pectins

A powdery sugar beet pectin (loss upon drying: 8 to 12%) was weighed out into ceramic containers (about 20 g per container), and leveled to a uniform thickness (about 5 mm). The pectin in some of the containers was heat-treated in an incubator at a constant relative humidity of 50% and at a constant temperature of 60°C or 80°C for 1 to 24 hours, to obtain the modified pectins shown in Table 6 (Preparation Examples 11-1 to 11-4 and Preparation Examples 12-1 to 12-4).

The pectin in some of the other containers was heat-treated in an incubator at a constant relative humidity of 70% and at a constant temperature of 60°C or 80°C for 1 to 48 hours, to obtain the modified pectins shown in Table 7 (Preparation Examples 13-1 to 13-4 and Preparation Examples 14-1 to 14-6).

The pectin in the remaining containers was heat-treated in a constant-temperature constant-humidity chamber set at a relative humidity of 80%, at 60°C and 80°C for 1 to 48 hours, to obtain the modified pectins shown in Table 8 (Preparation Examples 15-1 to 15-4 and Preparation Examples 16-1 to 16-7).

[Table 6]

| Heating time \ Heating temperature | 60°C | 80°C |
|---|---|---|
| 1 hr | Prep.Ex. 11-1 | Prep.Ex. 12-1 |
| 2.5 hr | Prep.Ex. 11-2 | Prep.Ex. 12-2 |
| 5 hr | Prep.Ex. 11-3 | Prep.Ex. 12-3 |
| 24 hr | Prep.Ex. 11-4 | Prep.Ex. 12-4 |

Relative humidity: fixed at 50%

[Table 7]

| Heating time \ Heating temperature | 60°C | 80°C |
|---|---|---|
| 1 hr | Prep.Ex. 13-1 | Prep.Ex. 14-1 |
| 2.5 hr | Prep.Ex. 13-2 | Prep.Ex. 14-2 |
| 5 hr | Prep.Ex. 13-3 | Prep.Ex. 14-3 |
| 24 hr | Prep.Ex. 13-4 | Prep.Ex. 14-4 |
| 32 hr | – | Prep.Ex. 14-5 |
| 48 hr | – | Prep.Ex. 14-6 |

Relative humidity: fixed at 70%

[Table 8]

| Heating time \ Heating temperature | 60°C | 80°C |
|---|---|---|
| 1 hr | Prep.Ex. 15-1 | Prep.Ex. 16-1 |
| 2.5 hr | Prep.Ex. 15-2 | Prep.Ex. 16-2 |
| 5 hr | Prep.Ex. 15-3 | Prep.Ex. 16-3 |
| 16 hr | – | Prep.Ex. 16-4 |
| 24 hr | Prep.Ex. 15-4 | Prep.Ex. 16-5 |
| 32 hr | – | Prep.Ex. 16-6 |
| 48 hr | – | Prep.Ex. 16-7 |

Relative humidity: fixed at 80%.

Examples 1 to 8: Improvement of water-dispersibility for HM pectin

Into 300 ml beakers, 250 ml quantities of deionized water (normal temperature: 25°C) were placed, and while stirring at 250 rpm (weak stirring condition), pectins (Examples 1 to 4, involving the modified pectins of Preparation Examples 1-2, 2-2, 3-2, and 4-2; Comparative Example 1: the non-heat-treated (unmodified) pectin (the unheated powdery HM pectin used for the Preparation Examples 1 to 4 (loss upon drying: less than 3%)) were added over a period of about 20 seconds to a concentration of 0.2% (w/v). The appearance (likeliness of lump formation) after stirring for 1 minute was observed, and the pectin hydration time (the time required for the solution to have a uniform appearance) when the solution was allowed to stand at 25°C after stirring for 1 minute was determined.

Further, the water dispersibility of the modified pectins of Preparation Example 7-2, 7-3, 7-4, and 7-5 (Examples 5 to 8), and the non-heat-treated (unmodified) pectin (Comparative Example 1) was evaluated in the same manner as above.

Table 9 shows the results. The appearance (the presence or absence of lumps) after stirring for 1 minute was evaluated according to the following criteria.

Evaluation criteria

5: Substantially no lumps or only one lump with a diameter of less than 1 mm was formed;
4: Small lumps (1 to 3 lumps with a diameter of about 1 to 3 mm) were formed;
3: Many small lumps (more than 3 lumps with a diameter of about 1 to 3 mm) were formed;
2: Large lumps (1 to 3 lumps with a diameter of more than about 3 mm) were formed;
1: Many large lumps or very large lumps (more than 3 lumps with a diameter of more than about 3 mm) were formed.

[Table 9]

| | HM pectin sample used | | | | Appearance after stirring for 1 min | Pectin hydration time |
|---|---|---|---|---|---|---|
| | | Heating temp. (°C) | Relative humidity (%) | Heating time (min) | | |
| Ex.1 | Prep. Ex.1-2 | 80 | <50 (unadjusted) | 30 | 3 | 5 hr |
| Ex.2 | Prep. Ex.2-2 | 105 | <50 (unadjusted) | 30 | 3 | 4.5 hr |
| Ex.3 | Prep. Ex.3-2 | 120 | <50 (unadjusted) | 30 | 5 | 3.5 hr |
| Ex.4 | Prep. Ex.4-2 | 140 | <50 (unadjusted) | 30 | 4 | 4 hr |
| Ex.5 | Prep. Ex.7-2 | 60 | 80 | 30 | 4 | 3.5 hr |
| Ex.6 | Prep. Ex.7-3 | 60 | 80 | 60 | 5 | 3.5 hr |
| Ex.7 | Prep. Ex.7-4 | 60 | 80 | 150 | 5 | 4 hr |
| Ex.8 | Prep. Ex.7-5 | 60 | 80 | 300 | 5 | 4.5 hr |
| Comp. Ex. 1 | Comp. Prep. Ex. | Unheated (unmodified) | | | 1 | 5 hr |

As shown in Table 9, the modified pectins of Preparation Examples 1-2 to 4-2 (modified under the conditions in which the relative humidity was not adjusted) used in Examples 1 to 4 showed better appearance in terms of lumps formed after stirring for 1 minute, as compared to the non-heat-treated pectin used in Comparative Example 1, indicating improved water dispersibility. This shows that the above-mentioned heat treatment was effective in increasing (improving) the water dispersibility of pectin. In particular, the modified pectin used in Example 3, which had been heated at 120°C for 30 minutes (Preparation Example 3-2), and the modified pectin used in Example 4, which had been heated at 140°C for 30 minutes (Preparation Example 4-2), had more improved water dispersibility than the modified pectin used in Example 1, which had been heated at 80°C for 30 minutes (Preparation Example 1-2), and the modified pectin used in Example 2, which had been heated at 105°C for 30 minutes (Preparation Example 2-2), indicating that the higher the heating temperature, the less likely lumps are formed. However, when the heat treatment temperature was high, an increased amount of unswollen (unhydrated) particles tended to form immediately after adding the modified pectin to water, and a prolonged pectin hydration time tended to be required. From the viewpoint of both water dispersibility and hydration time, the modified pectin of Example 3, which had been heated at 120°C for 30min (Preparation Example 3-2) was the best.

The modified pectins of Preparation Examples 7-2 to 7-5 (modified under at a constant humidity) used in Examples 5 to 8 showed better appearance in terms of lumps formed (after stirring for 1 minute, as compared to the non-heat-treated pectin used in Comparative Example 1, indicating improved water dispersibility. This reveals that heat treatment under the above conditions (a 80% relative humidity, 60°C, 30 to 300 minutes) is effective in increasing (improving) water dispersibility. However, there was a tendency for the pectin hydration time to increase when the heating time increases. From the viewpoint of both water dispersibility and hydration time, the modified pectin of Preparation Example 7-2 (heated at a relative humidity of 80% and 60°C for 30 minutes) used in Example 5, and the modified pectin of Preparation Example 7-3 (heated at a relative humidity of 80°C and 60°C for 60 minutes) used in Example 6 were excellent.

Examples 9-57: Improvement of viscosity-development property for HM pectin and sugar beet pectin

First, the viscosity-development property of HM pectin was studied. Into 300 ml beakers, 200 ml quantities of deionized water (normal temperature) were placed, followed by heating to 90°C. While stirring at 2000 rpm (strong stirring condition), pectins [the modified pectins of Preparation Examples 1-1 to 1-5 (Examples 9 to 13), Preparation Examples 2-1 to 2-5 (Examples 14 to 18), Preparation Examples 3-1 to 3-5 (Examples 19 to 23), and Preparation Examples 4-1 to 4-5 (Examples 24-28); and the non-heat-treated (unmodified) pectin (the unheated powdery HM pectin (loss upon drying: 3%) used for Preparation Examples 1 to 4) (Comparative Example 2)] were added over a period of about 20 seconds to a concentration of 2% (w/v). Each of the resulting mixtures was stirred for 10 minutes, cooled at 8°C for 10 minutes, and further cooled at 20°C for 2 hours, and the weight was adjusted with deionized water. After allowing the obtained mixture to stand at room temperature for 1 hour, the viscosity was measured (Brookfield rotational viscometer at a rotational speed of 60 rpm and a measurement temperature of 20°C; the rotor number was #3 when the viscosity at 60 rpm was more than 500 mPa·s, #2 when the viscosity at 60 rpm was 100 to 500 mPa·s, and #1 when the viscosity at 60 rpm was less than 100 mPa·s).

The viscosity-development property of the modified pectins of Preparation Examples 5-1 to 5-5 (Examples 29 to 33), the modified pectins of Preparation Examples 6-1 to 6-5 (Examples 34 to 38), the modified pectins of Preparation Examples 7-1 to 7-5 (Examples 39 to 43), and the non-heat-treated (unmodified) pectin (Comparative Example 2) was evaluated in the same manner as above.

Next, the viscosity-development property of sugar beet pectin was studied. Into 300 ml beakers, 200 ml quantities of deionized water (normal temperature) were placed, followed by heating to 90°C. While stirring at 2000 rpm (strong stirring condition), the modified pectins of Preparation Examples 8-1 to 8-5, Preparation Examples 9-1 to 9-5, and Preparation Examples 10-2 to 10-5 (Examples 44 to 57), and the non-heat-treated (unmodified) pectin (the unheated powdery sugar beet pectin (loss upon drying: 3%) used for Preparation Examples 8 to 9) (Comparative Example 3) were added over a period of about 20 seconds to a concentration of 3% (w/v). Each of the resulting mixtures was stirred for 10 minutes, cooled at 8°C for 10 minutes, and further cooled at 20°C for 2 hours, and the weight was adjusted with deionized water. After allowing the resulting mixture to stand at room temperature for 1 hour, the viscosity was measured (Brookfield rotational viscometer at a rotational speed of 60 rpm and a measurement temperature of 20°C; rotor number: #2).

Tables 10 and 11 show the results.

[Table 10]

| | HM pectin sample used | | | | Viscosity (mPa·s) |
|---|---|---|---|---|---|
| | | Heating temp. (°C) | Relative humidity (%) | Heating time (min) | |
| Ex. 9 | Prep.Ex.1-1 | 80 | <50 (unadjusted) | 15 | 750 |
| Ex. 10 | Prep.Ex.1-2 | 80 | <50 (unadjusted) | 30 | 796 |
| Ex. 11 | Prep.Ex.1-3 | 80 | <50 (unadjusted) | 60 | 756 |
| Ex.12 | Prep.Ex.1-4 | 80 | <50 (unadjusted) | 150 | 740 |
| Ex.13 | Prep.Ex.1-5 | 80 | <50 (unadjusted) | 300 | 744 |
| Ex.14 | Prep.Ex.2-1 | 105 | <50 (unadjusted) | 15 | 786 |
| Ex.15 | Prep.Ex.2-2 | 105 | <50 (unadjusted) | 30 | 724 |

(continued)

| | | HM pectin sample used | | | Viscosity (mPa·s) |
|---|---|---|---|---|---|
| | | Heating temp. (°C) | Relative humidity (%) | Heating time (min) | |
| Ex.16 | Prep.Ex.2-3 | 105 | <50 (unadjusted) | 60 | 660 |
| Ex.17 | Prep.Ex.2-4 | 105 | <50 (unadjusted) | 150 | 504 |
| Ex.18 | Prep.Ex.2-5 | 105 | <50 (unadjusted) | 300 | 297 |
| Ex.19 | Prep.Ex.3-1 | 120 | <50 (unadjusted) | 15 | 666 |
| Ex.20 | Prep.Ex.3-2 | 120 | <50 (unadjusted) | 30 | 530 |
| Ex.21 | Prep.Ex.3-3 | 120 | <50 (unadjusted) | 60 | 353 |
| Ex.22 | Prep.Ex.3-4 | 120 | <50 (unadjusted) | 150 | 160 |
| Ex.23 | Prep.Ex.3-5 | 120 | <50 (unadjusted) | 300 | 86 |
| Ex.24 | Prep.Ex.4-1 | 140 | <50 (unadjusted) | 15 | 431 |
| Ex.25 | Prep.Ex.4-2 | 140 | <50 (unadjusted) | 30 | 155 |
| Ex.26 | Prep.Ex.4-3 | 140 | <50 (unadjusted) | 60 | 58 |
| Ex.27 | Prep.Ex.4-4 | 140 | <50 (unadjusted) | 150 | 16 |
| Ex.28 | Prep.Ex.4-5 | 140 | <50 (unadjusted) | 300 | 8 |
| Ex.29 | Prep.Ex.5-1 | 60 | 50 | 15 | 580 |
| Ex.30 | Prep.Ex.5-2 | 60 | 50 | 30 | 606 |
| Ex.31 | Prep.Ex.5-3 | 60 | 50 | 60 | 628 |
| Ex.32 | Prep.Ex.5-4 | 60 | 50 | 150 | 644 |
| Ex.33 | Prep.Ex.5-5 | 60 | 50 | 300 | 598 |
| Ex.34 | Prep.Ex.6-1 | 60 | 70 | 15 | 594 |
| Ex.35 | Prep.Ex.6-2 | 60 | 70 | 30 | 612 |
| Ex.36 | Prep.Ex.6-3 | 60 | 70 | 60 | 648 |
| Ex.37 | Prep.Ex.6-4 | 60 | 70 | 150 | 617 |
| Ex.38 | Prep.Ex.6-5 | 60 | 70 | 300 | 570 |
| Ex.39 | Prep.Ex.7-1 | 60 | 80 | 15 | 600 |
| Ex.40 | Prep.Ex.7-2 | 60 | 80 | 30 | 630 |
| Ex.41 | Prep.Ex.7-3 | 60 | 80 | 60 | 610 |
| Ex.42 | Prep.Ex.7-4 | 60 | 80 | 150 | 578 |
| Ex.43 | Prep.Ex.7-5 | 60 | 80 | 300 | 564 |
| Comp. Ex.2 | Comparative Prep.Ex. | Non-heat-treated (unmodified) | | | 580 |

[Table 11]

| | | Sugar beet pectin sample used | | | Viscosity (mPa·s) |
|---|---|---|---|---|---|
| | | Heating temp. (°C) | Relative humidity (%) | Heating time (min) | |
| Ex.44 | Prep.Ex.8-1 | 60 | <50 (unadjusted) | 30 | 165 |

(continued)

| | | Sugar beet pectin sample used | | | Viscosity (mPa·s) |
|---|---|---|---|---|---|
| | | Heating temp. (°C) | Relative humidity (%) | Heating time (min) | |
| Ex.45 | Prep.Ex.8-2 | 80 | <50 (unadjusted) | 30 | 184 |
| Ex.46 | Prep.Ex.8-3 | 105 | <50 (unadjusted) | 30 | 213 |
| Ex.47 | Prep.Ex.8-4 | 120 | <50 (unadjusted) | 30 | 252 |
| Ex.48 | Prep.Ex.8-5 | 140 | <50 (unadjusted) | 30 | 374 |
| Ex.49 | Prep.Ex.9-1 | 105 | <50 (unadjusted) | 15 | 165 |
| Ex.50 | Prep.Ex.9-2 | 105 | <50 (unadjusted) | 30 | 184 |
| Ex.51 | Prep.Ex.9-3 | 105 | <50 (unadjusted) | 60 | 213 |
| Ex.52 | Prep.Ex.9-4 | 105 | <50 (unadjusted) | 150 | 252 |
| Ex.53 | Prep.Ex.9-5 | 105 | <50 (unadjusted) | 300 | 374 |
| Ex.54 | Prep.Ex.10-2 | 80 | 80 | 30 | 186 |
| Ex.55 | Prep.Ex.10-3 | 80 | 80 | 60 | 192 |
| Ex.56 | Prep.Ex.10-4 | 80 | 80 | 150 | 204 |
| Ex.57 | Prep.Ex.10-5 | 80 | 80 | 300 | 268 |
| Comp. Ex.3 | Comparative Prep.Ex. | Non-heat-treated (unmodified) | | | 174 |

With respect to the HM pectin (Table 10), under the conditions in which the relative humidity was not adjusted, heat treatment at 80°C for short to long periods resulted in increased viscosity; and heat treatment at 105°C for about 100 minutes or less and heat treatment at 120°C for about 20 minutes or less also resulted in increased viscosity (high-viscosity-development property). In view of the tendency of the above results, when the heating temperature is 140°C, a short heating time of about 5 minutes or less is deemed to be effective (high-viscosity-development property). Of the tested modified pectins, the modified pectin that had been heated at 80°C for 30 minutes (Example 10; Preparation Example 1-2) showed the greatest increase in viscosity.

Further, there was a tendency for the viscosity of aqueous solutions of the modified pectin to reduce as the heating temperature increases and as the heating time increases (low-viscosity-development property). Specifically, heat treatment at 105°C for about 150 minutes or more, heat treatment at 120°C for about 30 minutes or more, and heat treatment at 140°C for about 10 minutes or more tended to result in reduced viscosity.

The above reveals that, by combining the heating temperature and heating time, the viscosity can be increased (high-viscosity-development property) or decreased (low-viscosity-development property) as compared to the aqueous solutions of non-heat-treated pectin (Comparative Example 2), i.e., the viscosity-development property of the pectin can be controlled.

The samples (Examples 20 and 25) prepared from the modified pectins (Preparation Examples 3-2 and 4-2) that showed good water dispersibility in Examples 3 and 4 (Table 9) had lower viscosity than the sample (Comparative Example 2) prepared from the non-heat-treated pectin (Comparative Preparation Example). This suggested that these modified pectins had not been fully hydrated about one hour after preparation. It can be presumed that, in pectins modified by heat treatment under relatively high temperature conditions, such as 120°C for 30 minutes and 140°C for 30 minutes (Preparation Examples 3-2 and 4-2), a partial gel structure is formed as a result of intramolecular and/or intermolecular interactions due to the increase in molecular weight, so that water does not rapidly permeate (hydration does not readily occur), leading to increased (improved) water dispersibility.

Furthermore, it can be presumed that, in samples (e.g., Examples 9 to 16 and 19) having higher viscosity than the sample prepared from the unheated pectin (Comparative Example 2), the gel structure formed the increase in molecular weight caused by heat treatment is relatively weak and is easily disintegrated by stirring, resulting in an increase in the solution viscosity. The samples (Examples 27 and 28) prepared from the pectins modified by heat treatment under high-temperature conditions for long periods of time, such as 140°C for 150 or 300 minutes (Preparation Examples 4-4 and 4-5) had low viscosity but very high foamability. This suggests that heat treatment carried out at high temperatures for long periods of time causes the depolymerization of pectin molecules.

When the relative humidity was adjusted, the modified pectins of Preparation Examples 5-1 to 5-5 (heated at a relative humidity of 50% and 60°C for 15 to 300 minutes) used in Examples 29 to 33, the modified pectins of Preparation Examples 6-1 to 6-4 (heated at a relative humidity of 70% and 60°C for 15 to 150 minutes) used in Examples 34 to 37, and the modified pectins of Preparation Examples 7-1 to 7-3 (heated at a relative humidity of 80% and 60°C for 15 to 60 minutes) used in Examples 39 to 41 had higher viscosity (high-viscosity-development property) than the non-heat-treated pectin of Comparative Example 2. Moreover, it was found that the higher the relative humidity, the shorter the heat treatment required to increase the viscosity, and therefore the production conditions can be optimized (the production time can be reduced) by adjusting the relative humidity.

There was also a tendency for the viscosity of aqueous solutions of the modified pectin to reduce as the heating time increases (low-viscosity-development property). Specifically, heat treatment at a relative humidity of 70% and 60°C for about 300 minutes or more (Example 38), and heat treatment at a relative humidity of 80% and 60°C for about 150 minutes or more (Examples 42 to 43) tended to result in reduced viscosity.

The above results show that, when the relative humidity is adjusted, the viscosity can also be increased (high-viscosity-development property) or decreased (low-viscosity-development property) as compared to the aqueous solution of the non-heat-treated pectin (Comparative Example 2) by combining the heating temperature and heating time, i.e., the viscosity-development property of HM pectin can be controlled.

With respect to the sugar beet pectin (Table 11), when the relative humidity was not adjusted, the viscosity tended to increase as the heating temperature increased and as the heating time increased.

In the case where the humidity was adjusted (relative humidity: 80%), the viscosity increased as the heating time increased (high-viscosity-development property). However, when the heating time was more than 16 hours, the viscosity decreased to a value lower than that of the sample of Comparative Example 3(low-viscosity-development property). It was found that, by combining the heating temperature and heating time, the viscosity can be increased (high-viscosity-development property) or decreased (low-viscosity-development property) as compared to aqueous solutions of the non-heat-treated pectin (Comparative Example 3), i.e., the viscosity-development property of sugar beet pectin can be controlled.

Examples 58-65: Improvement of gelling property of HM pectin

Using the modified pectins of Preparation Examples 1-2, 2-2, 3-2, and 4-2 and unheated pectin (Comparative Preparation Example), pectin gels (pectin concentration: 0.3%, sugar concentration: 70%, pH 3) were prepared (Examples 58 to 61 and Comparative Example 4).

Specifically, a mixture of 1.5 g of pectin and 25 g of sugar was added to 90°C deionized water, and then 325 g of sugar was added and dissolved by stirring for 10 minutes. After adjusting the weight with deionized water to 500 g, the resulting solution was cooled to 40°C by allowing it to stand at room temperature, and 0.2 to 0.3 ml of 50% (w/v) citric acid solution was added to adjust the pH to 3. The obtained mixture was placed into cups (diameter: 6 cm, height: 4 cm) (about 80 g/cup), cooled at 8°C for 1 hour, and stored overnight in a refrigerator at 4°C, to obtain a pectin gel.

On the following day, the pectin gel was allowed to warm to room temperature, and subjected to a rupture test using a texture analyzer (TA-TX2, a product of SMS with a cylindrical plunger having a surface area of 1 cm$^2$ at a table speed of 1 mm/sec, to determine the apparent rupture stress. From the rupture stress of gels obtained, the gelling property (hard gel or soft gel property) of the modified pectins were evaluated.

In the same manner as above, the gelling property of the modified pectins of Preparation Examples 5-2, 5-3, 5-4, and 5-5 (Examples 62 to 65) and the non-heat-treated (unmodified) pectin (Comparative Example 4) were evaluated.

Table 12 shows the results.

[Table 12]

| | HM pectin sample used | | | | Rupture stress (mPa·s) |
|---|---|---|---|---|---|
| | | Heating temp. (°C) | Relative humidity (%) | Heating time (min) | |
| Ex.58 | Prep.Ex.1-2 | 80 | <50 (unadjusted) | 30 | 7.7 x 10$^3$ |
| Ex.59 | Prep.Ex.2-2 | 105 | <50 (unadjusted) | 30 | 9.6 x 10$^3$ |
| Ex.60 | Prep.Ex.3-2 | 120 | <50 (unadjusted) | 30 | 6.7 x 10$^3$ |
| Ex.61 | Prep.Ex.4-2 | 140 | <50 (unadjusted) | 30 | 6.2 x 10$^3$ |
| Ex.62 | Prep.Ex.5-2 | 60 | 50 | 30 | 6.3 x 10$^3$ |
| Ex.63 | Prep.Ex.5-3 | 60 | 50 | 60 | 7.2 x 10$^3$ |

(continued)

| | HM pectin sample used | | | | Rupture stress (mPa·s) |
|---|---|---|---|---|---|
| | | Heating temp. (°C) | Relative humidity (%) | Heating time (min) | |
| Ex.64 | Prep.Ex.5-4 | 60 | 50 | 150 | $8.3 \times 10^3$ |
| Ex.65 | Prep.Ex.5-5 | 60 | 50 | 300 | $6.1 \times 10^3$ |
| Comp. Ex.4 | Comparative Prep.Ex. | Non-heat-treated (unmodified) | | | $6.3 \times 10^3$ |

Table 12 shows that, in the case where the relative humidity was not adjusted, the rupture stress of gels obtained when using the modified pectin that had been heat-treated at 105°C in Preparation Example 2-2 (Example 59) was the maximum and about 1.5 times as large as that obtained when using the non-heat-treated pectin of Comparative Preparation Example (Comparative Example 4) (imparting hard gel property). When using the modified pectin that had been heat-treated at 140°C in Preparation Example 4-2 (Example 61), the rupture stress of gels was somewhat lower than that obtained when using the non-heat-treated pectin of Comparative Preparation Example (Comparative Example 4) (imparting soft gel property).

These results accord with those of the viscosity-development property shown in Table 10, and it is deemed that the reduction of the pectin hydration property, caused by the increase of molecular weight, contributes to decreased rupture stress with increasing heating temperature.

The above results show that the gelling property (gel hardness/softness) of pectin can be controlled by heat treatment. For example, to impart hard gel property to a pectin (to increase the rupture stress), heat treatment at 105°C for 30 minutes is preferable, and using these conditions as standards, the heat treatment conditions can be suitably controlled. To impart soft gel property to a pectin (to reduce the rupture stress), in view of the tendency of the rupture stress shown in Table 12, heat treatment at about 140°C to about 150°C for about 30 minutes or more is effective.

When the relative humidity was adjusted, the modified pectins of Preparation Examples 5-3 and 5-4 (heated at a relative humidity of 50% and 60°C for 60 to 150 minutes) used in Examples 63 and 64 exhibited higher rupture stress (imparted hard gel property) than the non-heat-treated pectin of Comparative Example 4.

These results reveal that when the relative humidity is adjusted, it is also possible to increase (impart hard gel property) or decrease (impart soft gel property) the rupture stress of gels as compared to the non-heat-treated pectin (Comparative Example 4) by combining the heating temperature and heating time, indicating that the gelling property of pectin can be controlled.

Examples 66 to 83: Improvement of water holding for HM pectin and sugar beet pectin

Deionized water was added to mixtures each containing cornstarch (unprocessed raw starch) and the modified pectin (Preparation Example 1-1, 1-2, 1-3, 1-5, 2-2, 3-2, 10-3, 10-4, or 10-5) or unheated (unmodified) pectin (Comparative Preparation Example), to a starch concentration of 15% (w/v) and a pectin concentration of 0.5%. According to the following thermal program, the viscosity of the resulting starch pastes (starch/pectin composite in an aqueous system) were measured using a Rapid Visco Analyzer (a product of Newport Scientific). Further, starch pastes (starch/pectin composite in an aqueous system) (starch concentration: 5% (w/v), pectin concentration: 0.5%) prepared according to the same thermal program were stored at 4°C for 1 week, and the proportion of syneresis was measured in the following manner: 20 g of starch paste was weighed out into a centrifugation tube, stored at 4°C for 1 week, and centrifuged (16000 g for 30 minutes), and the weight of the liquid separated as an upper layer was measured to determine the weight proportion of syneresis to the starch paste before centrifugation.

Table 13 shows the results concerning the peak viscosity (RVAU) of the starch pastes (starch/pectin composite in an aqueous system). Table 14 shows the results on syneresis upon storage at 4°C for 1 week.

Thermal program

1) Holding at 50°C for 1 minute;
2) Heating from 50°C to 95°C at a rate of 12°C/min;
3) Holding at 95°C for 2.5 minutes;
4) cooling from 95°C to 50°C at a rate of 12°C/min;

5) Holding at 50°C for 2 minutes.

[Table 13]

| | Pectin sample used | | | | | Peak viscosity (RVAU) |
|---|---|---|---|---|---|---|
| | Kind | | Heating temp. (°C) | Relative humidity (%) | Heating time (min) | |
| Ex.66 | HM | Prep.Ex. 1-1 | 80 | <50 (unadjusted) | 15 | 598.8 |
| Ex. 67 | HM | Prep. Ex. 1-2 | 80 | <50 (unadjusted) | 30 | 585.0 |
| Ex. 68 | HM | Prep.Ex. 1-3 | 80 | <50 (unadjusted) | 60 | 566.9 |
| Ex.69 | HM | Prep.Ex. 1-5 | 80 | <50 (unadjusted) | 300 | 555.3 |
| Ex.70 | HM | Prep.Ex. 2-2 | 105 | <50 (unadjusted) | 30 | 571.8 |
| Ex.71 | HM | Prep.Ex. 3-2 | 120 | <50 (unadjusted) | 30 | 523.2 |
| Comp. Ex.5 | HM | Comp.Prep. Ex. | Non-heat-treated (unmodified) | | | 535.8 |
| Ex.72 | Sugar beet | Prep.Ex. 10-3 | 80 | 80 | 60 | 503.7 |
| Ex.73 | Sugar beet | Prep.Ex. 10-4 | 80 | 80 | 150 | 511.9 |
| Ex.74 | Sugar beet | Prep.Ex. 10-5 | 80 | 80 | 300 | 538.6 |
| Comp. Ex. 6 | Sugar beet | Comp.Prep. Ex. | Non-heat-treated (unmodified) | | | 487.5 |

[Table 14]

| | Pectin sample used | | | | | Syneresis (%) |
|---|---|---|---|---|---|---|
| | Kind | | Heating temp. (°C) | Relative humidity (%) | Heating time (min) | |
| Ex.75 | HM | Prep.Ex. 1-1 | 80 | <50 (unadjusted) | 15 | 32.3 |
| Ex.76 | HM | Prep.Ex. 1-2 | 80 | <50 (unadjusted) | 30 | 34.5 |
| Ex.77 | HM | Prep.Ex. 1-3 | 80 | <50 (unadjusted) | 60 | 37.2 |
| Ex.78 | HM | Prep.Ex. 1-5 | 80 | <50 (unadjusted) | 300 | 39.0 |
| Ex.79 | HM | Prep.Ex. 2-2 | 105 | <50 (unadjusted) | 30 | 35.5 |
| Ex.80 | HM | Prep.Ex. 3-2 | 120 | <50 (unadjusted) | 30 | 41.6 |
| Comp. Ex.7 | HM | Comp.Prep. Ex. | Non-heat-treated (unmodified) | | | 41.8 |
| Ex.81 | Sugar beet | Prep.Ex. 10-3 | 80 | 80 | 60 | 42.5 |

(continued)

| | Pectin sample used | | | | | Syneresis (%) |
|---|---|---|---|---|---|---|
| | Kind | | Heating temp. (°C) | Relative humidity (%) | Heating time (min) | |
| Ex.82 | Sugar beet | Prep.Ex. 10-4 | 80 | 80 | 150 | 41.3 |
| Ex.83 | Sugar beet | Prep.Ex. 10-5 | 80 | 80 | 300 | 40.5 |
| Comp. Ex.8 | Sugar beet | Comp.Prep. Ex. | Non-heat-treated (unmodified) | | | 43.9 |

Comparison of Tables 13 and 14 with Tables 10 and 11 indicates that modified pectins with high-viscosity-development property tend to form starch pastes (starch/pectin composite in an aqueous system) with high peak viscosity, and that modified pectins that form starch pastes with high peak viscosity exhibit good water holding with reduced syneresis.

Such water holding (syneresis inhibiting effect) of the modified pectins can be achieved presumably because the modified pectins, which have been provided with a gel-like structure by heat treatment, capture the moisture released from starch as a result of aging and entrap the moisture within the structure.

Examples 84 and 85: Improvement of dispersion stability of acidified milk beverage for HM pectin

Acidified milk beverages were prepared using the modified pectins (Preparation Examples 1-2 and 2-2) shown in Table 1 and the non-heat-treated (unmodified) pectin (unheated powdery HM pectin (loss upon drying: less than 3% prepared in Preparation Examples 1 and 2) (Comparative Preparation Example). Specifically, a mixture of sugar (70 g) and pectin (3 g) was first added to water (627 g), dissolved by stirring at 80°C for 10 minutes, and cooled. Separately, a skim milk powder (30 g) was added to water (270 g), dissolved by stirring at 60°C for 10 minutes, and cooled. The prepared solutions were mixed together, and adjusted to pH 3.8 with a 50% (w/v) citric acid solution. The resulting mixture was heated again to 80°C, homogenized (first stage: 9800 Pa, second stage: 4900 Pa), sterilized by heating to 93°C, and hot-packed, to obtain an acidified milk beverage.

After storage at room temperature for 1 day, a 70 g sample of the beverage was weighed out into a centrifuging tube, and centrifuged at 3000 rpm for 20 minutes. After removing the supernatant, the centrifuging tube was placed upside down on paper towel and allowed to stand for 50 minutes. The weight of the precipitates was measured to calculate the proportion of precipitates (%). The larger the proportion of precipitates, the lower the storage stability. Table 15 shows the results of testing acidified milk beverages prepared using the modified pectins of Preparation Examples 1-2 and 2-2 and the unheated pectin (Comparative Preparation Example).

[Table 15]

| | HM pectin sample used | | | | Proportion of precipitates (%) |
|---|---|---|---|---|---|
| | | Heating temp. (°C) | Relative humidity (%) | Heating time (min) | |
| Ex.84 | Prep.Ex. 1-2 | 80 | <50 (unadjusted) | 30 | 0.74 |
| Ex.85 | Prep.Ex. 2-2 | 105 | <50 (unadjusted) | 30 | 0.66 |
| Comp. Ex.9 | Comp.Prep. Ex. | Non-heat-treated (unmodified) | | | 0.94 |

The acidified milk beverages (Examples 84 and 85) containing the pectins modified by heating under the conditions of 80°C for 30 minutes (relative humidity: unadjusted, <50%) and 105°C for 30 minutes (relative humidity: unadjusted, <50%) (Preparation Examples 1-2 and 2-2) had reduced proportions of precipitates as compared to the acidic milk beverage (Comparative Example 9) containing the non-heat-treated (unmodified) pectin (Comparative Preparation Example). These results indicate that the modified pectin of the present invention improves (increases) the dispersion stability of acidified milk beverages.

Examples 86 to 124: Improvement of emulsifying activity and emulsion stability for sugar beet pectin

(1) Preparation of aqueous solutions using the sugar beet pectins of Preparation Examples 8 and 9

Into 300 ml beakers, 200 ml quantities of deionized water (normal temperature) were placed, followed by heating to 90°C. While stirring with stirring blades at 1000 rpm (strong stirring condition), the modified pectins of Preparation Examples 8-1 to 8-5 and Preparation Examples 9-1 to 9-5 and the non-heat-treated (unmodified) pectin of Comparative Preparation Example (the unheated powdery sugar beet pectin (loss upon drying: less than 3%) used to prepare the modified pectins of Preparation Examples 8 and 9) were added over a period of about 20 seconds to a concentration of 1.76% (w/v). Thereafter, the resulting mixtures were stirred for 10 minutes and cooled to room temperature. The weight was adjusted with deionized water, to obtain aqueous sugar beet pectin solutions.

(2) Preparation of aqueous solutions using sugar beet pectins of Preparation Examples 11 to 16

Into 300 ml beakers, 200 ml quantities of deionized water (normal temperature) were placed, and while stirring using a Polytron homogenizer at 24000 rpm, the modified pectins of Preparation Examples 11-1 to 11-4, 12-1 to 12-4, 13-1 to 13-4, 14-1 to 14-6, 15-1 to 15-4, and Preparation Examples of 16-1 to 16-7) and the non-heat-treated (unmodified) pectin of Comparative Preparation Example (the unheated powdery sugar beet pectin (loss upon drying: 8 to 12%) used to prepare the modified pectins of Preparation Examples 11 to 16) were added over a period of about 20 seconds to a concentration of 1.18% (w/v). Thereafter, the resulting mixtures were stirred at 24000 rpm for a further 1 minute, to obtain aqueous sugar beet pectin solutions.

Middle-chain triglyceride (15 ml) was added to 86 ml of each of the aqueous sugar beet pectin solutions obtained by the above method. The resulting mixtures were pre-emulsified by stirring using a Polytron homogenizer at 24,000 rpm for 1 minute, adjusted to pH 3.0 with a 10% aqueous citric acid solution, and emulsified using a high-pressure homogenizer (50 MPa x 2 times). Concentrations of sugar beet pectin were 1.5 and 1% (w/v) in emulsions. Average particle diameters of the oil droplets were measured immediately after preparation, and after storage at 40°C for 30 days or after storage at 60°C for 3 days, using a laser diffraction particle size distribution measuring apparatus (SALD-1100 or 2100).

Tables 16 and 17 show the results.

[Table 16]

| | Sugar beet pectin sample used | | | | Average particle diameter | |
|---|---|---|---|---|---|---|
| | | Heating temp. (°C) | Relative humidity (%) | Heating time (min) | Immediately after preparation ($\mu$m) | After storage at 40°C for 30 days ($\mu$m) |
| Ex.86 | Prep. Ex.8-1 | 60 | <50 (unadjusted) | 30 | 0.43 | 1.35 |
| Ex.87 | Prep. Ex.8-2 | 80 | <50 (unadjusted) | 30 | 0.45 | 1.11 |
| Ex.88 | Prep. Ex.8-3 | 105 | <50 (unadjusted) | 30 | 0.38 | 0.71 |
| Ex.89 | Prep. Ex.8-4 | 120 | <50 (unadjusted) | 30 | 0.43 | 0.74 |
| Ex.90 | Prep. Ex.8-5 | 140 | <50 (unadjusted) | 30 | 0.43 | 0.56 |
| Ex.91 | Prep. Ex.9-1 | 105 | <50 (unadjusted) | 15 | 0.47 | 1.00 |
| Ex.92 | Prep. Ex.9-2 | 105 | <50 (unadjusted) | 30 | 0.38 | 0.71 |
| Ex.93 | Prep. Ex.9-3 | 105 | <50 (unadjusted) | 60 | 0.45 | 0.54 |

(continued)

| | | Sugar beet pectin sample used | | | Average particle diameter | |
|---|---|---|---|---|---|---|
| | | Heating temp. (°C) | Relative humidity (%) | Heating time (min) | Immediately after preparation (μm) | After storage at 40°C for 30 days (μm) |
| Ex.94 | Prep. Ex.9-4 | 105 | <50 (unadjusted) | 150 | 0.46 | 0.55 |
| Ex.95 | Prep. Ex.9-5 | 105 | <50 (unadjusted) | 300 | 0.43 | 0.55 |
| Comp. Ex.10 | Comp. Prep.Ex. | Non-heat-treated (unmodified) | | | 0.51 | 1.61 |
| Sugar beet pectin concentration: 1.5%<br>Laser diffraction particle size distribution measuring apparatus: SALD-1100 | | | | | | |

[Table 17]

| | | Sugar beet pectin sample used | | | Average particle diameter | |
|---|---|---|---|---|---|---|
| | | Heating temp. (°C) | Relative humidity (%) | Heating time (hr) | Immediately after preparation (μm) | After storage at 60°C for 30 days (μm) |
| Ex.96 | Prep.Ex.11-1 | 60 | 50 | 1 | 0.62 | 3.44 |
| Ex.97 | Prep.Ex.11-2 | 60 | 50 | 2.5 | 0.65 | 3.65 |
| Ex.98 | Prep.Ex.11-3 | 60 | 50 | 5 | 0.65 | 3.68 |
| Ex.99 | Prep.Ex.11-4 | 60 | 50 | 24 | 0.62 | 3.77 |
| Ex. 100 | Prep.Ex.12-1 | 80 | 50 | 1 | 0.61 | 3.57 |
| Ex.101 | Prep.Ex.12-2 | 80 | 50 | 2.5 | 0.65 | 3.88 |
| Ex. 102 | Prep.Ex.12-3 | 80 | 50 | 5 | 0.58 | 3.07 |
| Ex. 103 | Prep.Ex.12-4 | 80 | 50 | 24 | 0.49 | 1.15 |
| Ex.104 | Prep.Ex.13-1 | 60 | 70 | 1 | 0.61 | 3.49 |
| Ex. 105 | Prep.Ex.13-2 | 60 | 70 | 2.5 | 0.60 | 3.92 |
| Ex. 106 | Prep.Ex.13-3 | 60 | 70 | 5 | 0.58 | 3.74 |
| Ex.107 | Prep.Ex.13-4 | 60 | 70 | 24 | 0.55 | 3.94 |
| Ex.108 | Prep.Ex.14-1 | 80 | 70 | 1 | 0.47 | 3.11 |
| Ex.109 | Prep.Ex.14-2 | 80 | 70 | 2.5 | 0.45 | 3.57 |
| Ex.110 | Prep.Ex.14-3 | 80 | 70 | 5 | 0.42 | 2.75 |
| Ex.111 | Prep.Ex.14-4 | 80 | 70 | 24 | 0.45 | 1.08 |
| Ex.112 | Prep.Ex.14-5 | 80 | 70 | 32 | 0.50 | 1.02 |
| Ex.113 | Prep.Ex.14-6 | 80 | 70 | 48 | 0.53 | 0.75 |
| Ex.114 | Prep.Ex.15-1 | 60 | 80 | 1 | 0.60 | 3.86 |
| Ex.115 | Prep.Ex.15-2 | 60 | 80 | 2.5 | 0.64 | 3.59 |
| Ex.116 | Prep.Ex.15-3 | 60 | 80 | 5 | 0.56 | 1.99 |
| Ex.117 | Prep.Ex.15-4 | 60 | 80 | 24 | 0.50 | 1.59 |

(continued)

| | Sugar beet pectin sample used | | | | Average particle diameter | |
|---|---|---|---|---|---|---|
| | | Heating temp. (°C) | Relative humidity (%) | Heating time (hr) | Immediately after preparation (μm) | After storage at 60°C for 30 days (μm) |
| Ex.118 | Prep.Ex.16-1 | 80 | 80 | 1 | 0.45 | 4.22 |
| Ex.119 | Prep.Ex.16-2 | 80 | 80 | 2.5 | 0.44 | 4.48 |
| Ex.120 | Prep.Ex.16-3 | 80 | 80 | 5 | 0.45 | 2.57 |
| Ex.121 | Prep.Ex.16-4 | 80 | 80 | 16 | 0.48 | 0.64 |
| Ex.122 | Prep.Ex.16-5 | 80 | 80 | 24 | 0.51 | 0.66 |
| Ex.123 | Prep.Ex.16-6 | 80 | 80 | 32 | 0.56 | 0.67 |
| Ex.124 | Prep.Ex.16-7 | 80 | 80 | 48 | 0.63 | 0.83 |
| Comp. Ex. 11 | Comp.Prep. Ex. | Non-heat-treated (unmodified) | | | 0.71 | 3.81 |
| Sugar beet pectin concentration: 1.0% Laser diffraction particle size distribution measuring apparatus: SALD-2100 | | | | | | |

As is clear from Table 16, in the case where the relative humidity was not adjusted, the average particle diameters of the oil droplets in the emulsions (Examples 86 to 90) prepared using the modified sugar beet pectins (Preparation Examples 8-1 to 8-5) were smaller immediately after the preparation thereof than that in the emulsion (Comparative Example 10) prepared using the unmodified sugar beet pectin (Comparative Preparation Example). Among the emulsions, the average particle diameter of the oil droplets in the emulsion (Example 88) prepared using the pectin (Preparation Example 8-3) modified by heating at 105°C for 30 minutes was the smallest (showing improved emulsifying activity).

The average particle diameter of the oil droplets in the emulsion (Comparative Example 10) prepared using the unmodified sugar beet pectin (Comparative Preparation Example) increased threefold upon storage at 40°C for 30 days, compared with that immediately after the preparation thereof. In contrast, the average particle diameters of the oil droplets in the emulsions (Examples 86 to 90) prepared using the modified sugar beet pectins (Preparation Examples 8-1 to 8-5) showed smaller change, and the modified pectins heated at higher temperatures exhibited a higher effect (improved emulsion stability). It is presumed that protein moiety bonded to the carbohydrate fraction (arabinogalactan-protein)plays an important role in emulsifying performance of sugar beet pectin. Therefore, the change in the molecular structure of the carbohydrate-protein conjugate fraction developed through heat treatment presumably contributes to an improvement in the emulsion stabilizing effect of pectin.

With respect to the emulsions (Examples 91 to 95) prepared using the modified sugar beet pectins (Preparation Examples 9-1 to 9-5) modified by heating at 105°C while varying the heating time, emulsion stability as well as viscosity tended to increase as the heating time was longer. However, in some cases, when the heating time exceeded 360 minutes, the pectin was browned; insoluble substances were generated as a by-product and its amount thereof increased extremely.

Table 17 shows that the emulsions (Examples 96 to 124) prepared using the sugar beet pectins modified by heating at relatively high humidity during heat treatment (e.g., Preparation Examples 11-1 to 11-4, Preparation Examples 12-1 to 12-4, Preparation Examples 13-1 to 13-4, Preparation Examples 14-1 to 14-6, Preparation Examples 15-1 to 15-4, and Preparation Examples 16-1 to 16-7, in which heat treatment was performed at a relative humidity of 50% or higher) showed increased emulsifying activity, even if the above-mentioned heat treatment was performed at a relatively low temperature (e.g., 60 to 80°C). In particular, the emulsions (Examples 108 to 113 and 120 to 124) prepared using the sugar beet pectins (Preparation Examples 14-1 to 14-6 and Preparation Examples 16-3 to 16-7) modified by heating at 80°C showed remarkable emulsifying activity and emulsion stability. Among the modified sugar beet pectins, those modified by heating at 80°C at a relative humidity of 70% for 24 hours or more (Preparation Examples 14-4 to 14-6) and those modified by heating at 80°C at a relative humidity of 80% for 16 hours or more (Preparation Examples 16-4 to 16-7) showed especially remarkable effects of improved emulsion stability (Examples 111 to 113 and 121 to 124).

Example 125: Preparation of Meat Patty

0.52 g of the modified HM pectin (Preparation Example 1-2) was added to 15 g of 25°C water, and dissolved by stirring (pectin solution). 4 g of salt, 0.5 g of pepper, and 0.2g of nutmeg were added to 400 g of minced beef, followed by light mixing. Then, the pectin solution prepared above was added, and kneaded by hand for 2 to 3 minutes. The result was formed into a disc 10 cm in diameter with 80 g per piece, and frozen at -40°C for 3 hours, followed by storage in a freezer at a temperature of -20°C for 3 days (preparation of frozen meat patty).

The obtained frozen meat patty was grilled on a 180°C hot plate for 3 minutes on each of the front and rear sides (for a total of 6 minutes) without covering. The result was wrapped and left at room temperature (25°C) for 10 minutes. Then, the texture was evaluated, and the yield and deformation ratio were measured. For comparison, a frozen meat patty (Comparative Example 12) was similarly prepared using the non-heat-treated (unmodified) pectin (powdered HM pectin before heat treatment prepared in Preparation Example 1-2 (loss upon drying of less than 3%)) (comparative Preparation Example) in place of the above-mentioned modified pectin. Then, the texture was evaluated, and the yield and deformation ratio were measured.

The yield was determined by measuring the weights before and after cooking according to the equation (weight after cooking /weight before cooking) $\times$ 100(%), and evaluated. The deformation ratio was determined by measuring the surface area of the disc-like patty before and after heat treatment according to the equation 100-(surface area after cooking/surface area before cooking) $\times$ 100(%), and evaluated.

The higher yields mean that the water loss due to cooking was low. Moreover, the smaller deformation ratio means that the shrinkage of the meat patty due to cooking was small.

The results are shown in Table 18.

[Table 18]

| | Pectin sample to be used | | | Texture | Yield (%) | Deformation ratio (%) |
|---|---|---|---|---|---|---|
| | | Heating temperature (°C) | Heating time (minute) | | | |
| Ex. 125 | Prep. Ex. 1-2 | 80 | 30 | Soft and juicy | 74.5 | 20.5 |
| Com. Ex 12 | Comp. Prep. Ex | Non-heat-treated (unmodified) | | Hard and dry | 71.7 | 23.1 |

Table 18 showed that the addition of the modified pectin of Preparation Example 1-2 increased the yield of the prepared meat patty and reduced the deformation ratio, which showed that the moisture loss and deformation during cooking were inhibited. With respect to texture, a meat patty to which the modified pectin was added was preferable because the meat patty had a soft and juicy texture.

In contrast, a meat patty prepared using a non-heat-treated pectin as a Comparative Example had a hard and dry texture, i.e., a soft and juicy texture was not obtained.

Example 126: Preparation of Pasta

3.5 g of the modified pectin (Preparation Example 2-2) was mixed with 500 g of durum semolina flour. Separately, 3.75 g of salt was added to 71.25 g of 25°C water, and dissolved by stirring. The saline solution was added over 30 seconds to the flour/pectin-powder mixture, 100 g of whole egg, and 5 g of salad oil, while stirring with an electric-powered mixer. The result was stirred for 15 minutes to prepare a dough. The dough was stored for 30 minutes in a refrigerator at 4°C. After storage, the dough was molded, compounded, and compressed, and then cut into 40 cm lengths by a cutting edge #22, thereby preparing pasta (Example 126). This pasta was stored in a refrigerator at 4°C for one day, and boiled for 3 minutes in boiling water containing 0.5% of salt. Then, the texture was evaluated. This pasta had an elastic texture.

For comparison, using the non-heat-treated (unmodified) pectin (powdered HM pectin before heat treatment prepared in Preparation Example 2-2 (loss upon drying of less than 3%)) (comparative Preparation Example) in place of the above-mentioned modified pectin, pasta (Comparative Example 13) was similarly prepared. The obtained pasta was boiled for 3 minutes and the texture was evaluated, resulting in a hard texture, i.e., no elastic texture was obtained.

INDUSTRIAL APPLICABILITY

The present invention can modify pectin. The modified pectin itself is imparted with improved water dispersibility and ease of use, and thus can be widely applied. By the use of the modified pectin, a subject composition is imparted with more excellent physical properties, such as water dispersibility, emulsifying activity/emulsion stability, water holding property (syneresis inhibiting property), viscosity development property, gelling property, etc. Since these properties are closely related with texture, the use of the modified pectin can modify the texture of foodstuffs.

**Claims**

1.  A method of modifying pectin comprising heat-treating pectin in a powder form at 50 to 150°C for 1 minute to 48 hours.

2.  A method of modifying pectin according to claim 1, wherein the pectin has loss on drying of 20% by weight or less.

3.  A method of modifying pectin according to claim 1, wherein the heat-treatment is performed at a relative humidity of 20 to 90%.

4.  A method of modifying pectin according to claim 1, wherein the heat-treatment is performed under a reduced pressure condition.

5.  A method of modifying pectin according to claim 1, wherein the pectin is high methoxyl pectin whose esterification degree is not less than 50%.

6.  A method of modifying pectin according to claim 1, wherein the pectin is sugar beet pectin derived from sugar beet.

7.  Pectin which has been modified by a method according to any one of claims 1 to 6.

8.  A dispersant or a dispersion stabilizer consisting of pectin which has been modified by a method according to any one of claims 1 to 6 or comprising the pectin.

9.  An emulsifier or an emulsion stabilizer consisting of pectin which has been modified by a method according to any one of claims 1 to 6 or comprising the pectin.

10. A syneresis inhibitor consisting of pectin which has been modified by a method according to any one of claims 1 to 6 or comprising the pectin.

11. A texture modifier consisting of pectin which has been modified by a method according to any one of claims 1 to 6 or comprising the pectin.

12. A viscosity adjuster consisting of pectin which has been modified by a method according to any one of claims 1 to 6 or comprising the pectin.

13. A gelling agent consisting of pectin which has been modified by a method according to any one of claims 1 to 6 or comprising the pectin.

14. A composition comprising pectin which has been modified by a method according to any one of claims 1 to 6.

15. A composition of claim 14 comprising the modified pectin in a proportion of 0.01 to 10% by weight.

16. A composition according to claim 14, which is a foodstuff.

17. A method of modifying or improving physical properties of the subject composition comprising incorporating in the subject composition the pectin modified by a method according to any one of claims 1 to 6.

18. A method according to claim 17, which improves dispersion stability of the subject composition, wherein a physical property of the subject composition is dispersion stability.

**19.** A method according to claim 17, which improves emulsifying activity and/or emulsion stability of the subject composition, wherein physical properties of the subject composition are emulsifying activity and emulsion stability.

**20.** A method according to claim 17, which improves water holding property or syneresis inhibiting property of the subject composition, wherein a physical property of the subject composition is water holding property or syneresis inhibiting property.

**21.** A method according to claim 17, which improves texture of a foodstuff, wherein the subject composition is the foodstuff and a physical property of the subject composition is texture.

**22.** A method according to claim 17, which adjusts viscosity of the subject composition, wherein a physical property of the subject composition is viscosity.

**23.** A method according to claim 17, which increases viscosity of the subject composition, wherein a physical property of the subject composition is high viscosity development property.

**24.** A method according to claim 17, which reduces viscosity of the subject composition, wherein a physical property of the subject composition is low viscosity development property.

**25.** A method according to claim 17, which gives gelling property to the subject composition, wherein a physical property of the subject composition is gelling property.

**26.** A method according to claim 17, which increases gel strength of the subject composition, wherein a physical property of the subject composition is gelling property.

**27.** A method according to claim 17, which reduces gel strength of the subject composition, wherein a physical property of the subject composition is gelling property.

| INTERNATIONAL SEARCH REPORT | International application No. |
|---|---|
| | PCT/JP2006/311453 |

A. CLASSIFICATION OF SUBJECT MATTER
*C08B37/06*(2006.01)i, *A23L1/05*(2006.01)i

According to International Patent Classification (IPC) or to both national classification and IPC

B. FIELDS SEARCHED

Minimum documentation searched (classification system followed by classification symbols)
C08B37/06, A23L1/05

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,X | JP 2005-261430 A  (San-Ei Gen F.F.I., Inc.), 29 September, 2005 (29.09.05), Claims; Par. Nos. [0001], [0012]; examples (Family: none) | 1-27 |
| P,A | JP 2006-213867 A  (San-Ei Gen F.F.I., Inc.), 17 August, 2006 (17.08.06), Full text (Family: none) | 1-27 |
| P,A | WO 2005/092930 A1  (San-Ei Gen F.F.I., Inc.), 06 October, 2005 (06.10.05), Full text (Family: none) | 1-27 |

☒ Further documents are listed in the continuation of Box C.  ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 08 September, 2006 (08.09.06) | 19 September, 2006 (19.09.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/311453

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2000-14336 A (Yukijirushi Shokuhin Kabushiki Kaisha), 18 January, 2000 (18.01.00), Full text (Family: none) | 1-27 |
| Y | WO 2004/089992 A1 (Phillips Hydrocolloids Research Ltd.), 21 October, 2004 (21.10.04), Full text & EP 1612225 A1 | 1-27 |
| Y | WO 2003/093324 A1 (San-Ei Gen F.F.I., Inc.), 13 November, 2003 (13.11.03), Full text & EP 1505078 A1 & US 2005/158440 A1 | 1-27 |
| Y | JP 2000-60448 A (The Nisshin Oil Mills, Ltd.), 29 February, 2000 (29.02.00), Full text (Family: none) | 1-27 |
| Y | JP 11-308971 A (The Nisshin Oil Mills, Ltd.), 09 November, 1999 (09.11.99), Full text (Family: none) | 1-27 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10155432 A
- JP 2002330710 A
- JP H07184565 A

**Non-patent literature cited in the description**

- **NAOMICHI OKAZAKI ; MASAO SANO ; SAIWAI SHOBO.** *Food polysaccharide: Knowledge of emulsification, thickening, and gelation,* 2001